# EUROPEAN PATENT APPLICATION

(11) **EP 4 773 649 A1**
(43) Date of publication of application: **08.07.2026**
(21) Application number: 24870338.1
(22) Date of filing: 30.08.2024
(51) Int. Cl.: H04W 12/122

(54) **COMMUNICATION METHOD AND APPARATUS**

(30) Priority: 26.09.2023 CN 202311268410
(71) Applicant: HUAWEI TECHNOLOGIES CO., LTD., Shenzhen 518129 (CN)
(72) Inventor: QIANG, Li, Shenzhen, Guangdong 518129 (CN); WANG, Rui, Shenzhen, Guangdong 518129 (CN); LI, Bingzhao, Shenzhen, Guangdong 518129 (CN)
(74) Representative: MERH-IP Matias Erny Reichl Hoffmann Patentanwälte PartG mbB
(86) International application number: PCT/CN2024/116082
(87) International publication number: WO 2025/066792

(57) **Abstract**

Embodiments of this application provide a communication method and apparatus. The method includes: A terminal device receives a first message from a network device, where the first message indicates to set a power threshold corresponding to a first access type to a first preset value; and the terminal device sets, based on the first message, the power threshold corresponding to the first access type. In the method, the network device flexibly indicates the terminal device to set the power threshold corresponding to the first access type. In this way, a failure in normal communication caused because the terminal device accesses a low-security access network device/network and consequently is attacked by an unreal network can be effectively prevented. According to the method, security of communication between the terminal device and a real network can be effectively ensured.

## Description

### CROSS-REFERENCE TO RELATED APPLICATIONS

This application claims priority to Chinese Patent Application No. 202311268410.X, filed with the China National Intellectual Property Administration on September 26, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

With development of communication technologies, a quantity of terminals gradually increases. To implement better communication, more base stations are also deployed. To monitor user messages and steal user data (for example, steal bank card information and identity card information of users), attackers may deploy false base stations (false base stations, FBSs), and the false base stations attract, by using higher signal power, terminals to access. Once the terminals access the false base stations, the false base stations may initiate deny of service (deny of service, DoS) attacks on the terminals, causing the user data to be stolen. If uplink messages sent by the terminals or downlink messages sent by genuine base stations do not have integrity protection, the false base stations may further tamper with content in the uplink messages or content in the downlink messages. Consequently, security of information exchange between the terminals and the genuine base stations cannot be ensured.

Therefore, how to ensure security of communication between a terminal and a real network is an urgent problem to be resolved.

### SUMMARY

This application provides a communication method and apparatus, to effectively ensure security of communication between a terminal device and a real network.

According to a first aspect, an embodiment of this application provides a communication method. The method may be performed by a terminal device, or may be performed by a chip or a chip system corresponding to the terminal device. This is not limited. The terminal device is used as an example. Specific steps of the method may include: The terminal device receives a first message from a network device, where the first message indicates the terminal device to set a value of access information; and the terminal device sets the value of the access information based on the first message.

In this embodiment of this application, the network device may be an access network device or a core network device. If the access network device generates the first message and sends the first message to the terminal device, the first message may be an access stratum AS message, for example, a radio resource control setup RRC setup message, a radio resource control reestablishment RRC reestablishment message, a radio resource control release RRC release message, or a radio resource control reconfiguration RRC reconfiguration message. If the core network device generates the first message and sends the first message to the terminal device, the first message may be a non-access stratum NAS message, for example, a registration accept registration accept message, a registration reject registration reject message, a protocol data unit PDU session establishment accept message, or a PDU session modification accept message.

A system message is key information for connecting a mobile terminal device to a network. The system message provides the terminal device with all necessary information (parameters) needed for accessing the network. The access information in this embodiment of this application is information or a parameter that is in the system message and that is needed by the terminal device to be connected to (including access/hand over to/select/reselect/camp on) the network. For example, the access information may be but is not limited to a power threshold corresponding to an access type and/or a frequency priority corresponding to the access type.

In the solution of this application, the network device indicates the terminal device to flexibly set the value of the access information. In this way, a failure in normal communication caused because the terminal device accesses a low-security network and consequently is attacked by an unreal network/a malicious network/an insecure network can be effectively prevented. According to the method, security of communication between the terminal device and a real network can be effectively ensured.

In a possible implementation, before that the terminal device receives the first message from the network device, the method further includes: The terminal device sends capability information of the terminal device to the network device, where the capability information of the terminal device indicates that the terminal device supports setting the value of the access information.

In this implementation, the network device can learn that the terminal device has a capability of setting the value of the access information, so that the network device can effectively indicate the terminal device to perform setting.

In a possible implementation, the first message includes first indication information, and the first indication information indicates the terminal device to set a power threshold corresponding to a first access type to a first preset value. The first access type is a low-priority access type. For example, the first access type may be but is not limited to a second generation radio access network 2G GERAN or a third generation universal mobile telecommunications system terrestrial radio access network 3G UTRAN.

In this embodiment of this application, because the first access type is the low-priority access type, to prevent a security problem caused because the terminal device can access/hand over to/select/reselect/camp on an access network device/a network of the first access type, the power threshold corresponding to the access network device needs to be set to a large value, that is, the first preset value should be a large value.

In this implementation, the terminal device can be prevented from being attacked by the unreal network/malicious network/insecure network due to connection to a low-priority network, and communication security of the terminal device can be effectively ensured.

In a possible implementation, the first indication information further indicates to set a power threshold corresponding to a second access type to a second preset value. The second access type is a high-priority access type. For example, the second access type may be but is not limited to a fourth generation evolved universal mobile telecommunications system terrestrial radio access network 4G E-UTRAN or fifth generation new radio 5G NR. Alternatively, the second access type may be an access type corresponding to a future communication network, for example, an access type corresponding to a sixth generation 6G communication network/an extended access type of a 6G communication network.

Because the second access type is the high-priority access type, to make the terminal device more easily access an access network device/a network of the second access type, so as to ensure security of the terminal device, the power threshold corresponding to the second access type should be set to a small value, that is, the second preset value should be a small value. This is equivalent to decreasing a threshold for the terminal device to access/hand over to/select/reselect/camp on the access network device/network of the second access type.

In this implementation, the terminal device can be more easily connected to a high-priority network, so that the communication security of the terminal device can be ensured.

In a possible implementation, the first message further includes the first preset value and/or the second preset value. In this implementation, the network device may provide the terminal device with the first preset value and/or the second preset value based on an actual situation of a network corresponding to the first access type and/or an actual situation of a network corresponding to the second access type, so that the terminal device effectively sets a value of the power threshold corresponding to the access type.

In a possible implementation, the method further includes: The terminal device receives second indication information from the network device, where the second indication information indicates the terminal device to set the value of the access information based on a value in the system message.

In this implementation, when the terminal device does not need to be prevented from being attacked by the unreal network/malicious network/insecure network, the terminal device can normally use the system information broadcast by the network device, to implement network connection.

According to a second aspect, an embodiment of this application provides a communication method. The method may be performed by a network device, or may be performed by a chip or a chip system corresponding to the network device. This is not limited. The network device is used as an example. Specific steps of the method may include: The network device generates a first message, where the first message indicates a terminal device to set a value of access information; and the terminal device sends the first message to the terminal device.

In this embodiment of this application, the network device may be an access network device or a core network device. If the access network device generates the first message and sends the first message to the terminal device, the first message may be an access stratum AS message, for example, a radio resource control setup RRC setup message, a radio resource control reestablishment RRC reestablishment message, a radio resource control release RRC release message, or a radio resource control reconfiguration RRC reconfiguration message. If the core network device generates the first message and sends the first message to the terminal device, the first message may be a non-access stratum NAS message, for example, a registration accept registration accept message, a registration reject registration reject message, a protocol data unit PDU session establishment accept message, or a PDU session modification accept message.

A system message is key information for connecting a mobile terminal device to a network. The system message provides the terminal device with all necessary information (parameters) needed for accessing the network. The access information in this embodiment of this application is information or a parameter that is in the system message and that is needed by the terminal device to connect to (including access/hand over to/select/reselect/camp on) the network. For example, the access information may be but is not limited to a power threshold corresponding to an access type and/or a frequency priority corresponding to the access type.

In the solution of this application, the network device indicates the terminal device to flexibly set the value of the access information. In this way, a failure in normal communication caused because the terminal device accesses a low-security network and consequently is attacked by an unreal network/a malicious network/an insecure network can be effectively prevented. According to the method, security of communication between the terminal device and a real network can be effectively ensured.

In a possible implementation, the method further includes: The terminal device receives capability information of the terminal device, where the capability information of the terminal device indicates that the terminal device supports setting the value of the access information.

In this implementation, the network device may learn that the terminal device has a capability of setting the value of the access information, so that the network device can effectively indicate the terminal device to perform setting.

In a possible implementation, the first message includes first indication information, and the first indication information indicates the terminal device to set a power threshold corresponding to a first access type to a first preset value. The first access type is a low-priority access type. For example, the first access type may be but is not limited to a second generation radio access network 2G GERAN or a third generation universal mobile telecommunications system terrestrial radio access network 3G UTRAN.

In this implementation, the terminal device can be prevented from being attacked by the unreal network/malicious network/insecure network due to connection to a low-priority network, and communication security of the terminal device can be effectively ensured.

In a possible implementation, the first indication information further indicates to set a power threshold corresponding to a second access type to a second preset value. The second access type is a high-priority access type. For example, the second access type may be but is not limited to a fourth generation evolved universal mobile telecommunications system terrestrial radio access network 4G E-UTRAN or fifth generation new radio 5G NR. Alternatively, the second access type may be an access type corresponding to a future communication network, for example, an access type corresponding to a sixth generation 6G communication network/an extended access type of a 6G communication network.

In this implementation, the terminal device can be more easily connected to a high-priority network, so that the communication security of the terminal device can be ensured.

In a possible implementation, the first message further includes the first preset value and/or the second preset value. In this implementation, the network device may provide the terminal device with the first preset value and/or the second preset value based on an actual situation of a network corresponding to the first access type and/or an actual situation of a network corresponding to the second access type, so that the terminal device effectively sets a value of the power threshold corresponding to the access type.

In a possible implementation, the method further includes: The network device sends second indication information to the terminal device, where the second indication information indicates the terminal device to set the value of the access information based on a value in the system message.

In this implementation, when the terminal device does not need to be prevented from being attacked by the unreal network/malicious network/insecure network, the terminal device can normally use the system information broadcast by the network device, to implement network connection.

According to a third aspect, an embodiment of this application provides a communication method. The method may be performed by a terminal device, or may be performed by a chip or a chip system corresponding to the terminal device. This is not limited. The terminal device is used as an example. Specific steps of the method may include: The terminal device receives a first message from a network device, where the first message indicates to set a power threshold corresponding to a first access type to a first preset value; and then the terminal device sets, based on the first message, the power threshold corresponding to the first access type.

In this embodiment of this application, the network device may be an access network device or a core network device. If the access network device generates the first message and sends the first message to the terminal device, the first message may be an access stratum AS message, for example, a radio resource control setup RRC setup message, a radio resource control reestablishment RRC reestablishment message, a radio resource control release RRC release message, or a radio resource control reconfiguration RRC reconfiguration message. If the core network device generates the first message and sends the first message to the terminal device, the first message may be a non-access stratum NAS message, for example, a registration accept registration accept message, a registration reject registration reject message, a protocol data unit PDU session establishment accept message, or a PDU session modification accept message. The first access type is a low-priority access type. For example, the first access type may be but is not limited to a second generation radio access network 2G GERAN or a third generation universal mobile telecommunications system terrestrial radio access network 3G UTRAN.

In the solution of this application, the network device may flexibly indicate the terminal device to set the power threshold corresponding to the first access type (the low-priority access type). In this way, the terminal device may ignore and not use a power threshold that is included in a system message and that corresponds to the first access type, but set, based on an indication of the network device, the power threshold corresponding to the first access type to the first preset value (that is, a preset value). It can be learned from the method that the network device may indicate, to the terminal device based on an actual situation of an access type, a power threshold corresponding to the access type, to prevent the terminal device from accessing a low-priority network and being attacked by a low-priority unreal network/malicious network/insecure network, so that security of communication between the terminal device and a real network can be effectively ensured.

In this embodiment of this application, because the first access type is the low-priority access type, when the terminal device sets, based on the indication of the network device, the power threshold corresponding to the first access type to the first preset value (that is, the preset value), the first preset value should be a large value, so that the terminal device can be prevented from accessing/handing over to/selecting/reselecting/camping on an access network device corresponding to the first access type, to effectively ensure communication security of the terminal device.

In a possible implementation, before that the terminal device receives the first message from the network device, the method further includes: The terminal device sends capability information of the terminal device to the network device, where the capability information of the terminal device indicates that the terminal device supports setting the power threshold corresponding to the access type.

In this embodiment of this application, if the network device is the access network device, the terminal device may include the capability information of the terminal device in an access stratum AS message (for example, an RRC setup request message or an RRC control resource release request message), to send the capability information to the access network device. If the network device is the core network device, the terminal device may include the capability information of the terminal device in a non-access stratum NAS message (for example, a registration request registration request message), to send the capability information to the core network device.

In this implementation, the network device effectively learns that the terminal device supports setting the power threshold corresponding to the access type, and can effectively indicate the terminal device to set a power threshold corresponding to a specified access type.

In a possible implementation, the first message further indicates to set a power threshold corresponding to a second access type to a second preset value. In this embodiment of this application, the second access type is a high-priority access type, and the second access type may be but is not limited to a fourth generation evolved universal mobile telecommunications system terrestrial radio access network 4G E-UTRAN or fifth generation new radio 5G NR. Alternatively, the second access type may be an access type corresponding to a future communication network, for example, an access type corresponding to a sixth generation 6G communication network/an extended access type of a 6G communication network.

In this embodiment of this application, because the second access type is the high-priority access type, when the terminal device sets, based on an indication of the network device, the power threshold corresponding to the second access type to the second preset value (that is, a preset value), the second preset value should be a small value, so that the terminal device can more easily access/hand over to/select/reselect/camp on an access network device corresponding to the second access type.

In this implementation, the network device may further flexibly indicate the terminal device to set a power threshold corresponding to the high-priority access type, so that the terminal device can access a high-priority access network device, to ensure security of the terminal device.

In a possible implementation, the first message includes the first preset value and/or the second preset value.

In this implementation, the terminal device can effectively obtain, from the network device (that is, the access network device/core network device), a value (that is, the first preset value) of the power threshold corresponding to the first access type and a value (that is, the second preset value) of the power threshold corresponding to the second access type, to perform subsequent setting.

According to a fourth aspect, an embodiment of this application provides a communication method. The method may be performed by a network device, or may be performed by a chip or a chip system corresponding to the network device. This is not limited. The network device is used as an example. The method may specifically include: The network device generates a first message, where the first message indicates to set a power threshold corresponding to a first access type to a first preset value; and the network device sends the first message to a terminal device.

In this embodiment of this application, the network device may be an access network device or a core network device. If the access network device generates the first message and sends the first message to the terminal device, the first message may be an access stratum (AS) message, for example, a radio resource control setup RRC setup message, a radio resource control reestablishment RRC reestablishment message, a radio resource control release RRC release message, or a radio resource control reconfiguration RRC reconfiguration message. If the core network device generates the first message and sends the first message to the terminal device, the first message may be a non-access stratum (NAS) message, for example, a registration accept registration accept message, a registration reject registration reject message, a protocol data unit PDU session establishment accept message, or a PDU session modification accept message. In addition, the first access type is a low-priority access type. For example, the first access type may be but is not limited to a second generation radio access network 2G GERAN or a third generation universal mobile telecommunications system terrestrial radio access network 3G UTRAN.

In the solution of this application, the network device may flexibly indicate the terminal device to set the power threshold corresponding to the first access type (the low-priority access type). In this way, the terminal device may ignore and not use a power threshold that is included in a system message and that corresponds to the first access type, but set, based on an indication of the network device, the power threshold corresponding to the first access type to the first preset value (that is, a preset value). It can be learned from the method that the network device may indicate, to the terminal device based on an actual situation of an access type, a power threshold corresponding to the access network type, to prevent the terminal device from accessing a low-priority network and being attacked by a low-priority unreal network/malicious network, so that security of communication between the terminal device and a real network can be effectively ensured.

In a possible implementation, the method further includes: The network device receives capability information of the terminal device, where the capability information of the terminal device indicates that the terminal device supports setting the power threshold corresponding to the access type.

In this implementation, the network device can effectively learn that the terminal device supports setting the power threshold corresponding to the access type, and can effectively indicate the terminal device to set a power threshold corresponding to a specified access type.

In a possible implementation, the first message further indicates to set a power threshold corresponding to a second access type to a second preset value. In this embodiment of this application, the second access type is a high-priority access type, and the second access type may be but is not limited to a fourth generation evolved universal mobile telecommunications system terrestrial radio access network 4G E-UTRAN or fifth generation new radio 5G NR. Alternatively, the second access type may be an access type corresponding to a future communication network, for example, an access type corresponding to a sixth generation 6G communication network/an extended access type of a 6G communication network.

In this implementation, the network device may further flexibly indicate the terminal device to set a power threshold corresponding to an access network device of the high-priority access type, so that the terminal device can access a high-priority access network device, to ensure security of the terminal device.

In a possible implementation, the first message includes the first preset value and/or the second preset value.

In this implementation, the network device (that is, the access network device/core network device) can effectively provide the terminal device with a value (that is, the first preset value) of the power threshold corresponding to the first access type and a value (that is, the second preset value) of the power threshold corresponding to the second access type, so that the terminal device can effectively perform corresponding setting subsequently.

Embodiments of this application further provide a solution used to resolve a problem that a terminal device is attacked by an unreal network. For details about the solution, refer to the following fifth aspect and sixth aspect.

According to a fifth aspect, an embodiment of this application provides a communication method. The method may be performed by a terminal device, or may be performed by a chip or a chip system corresponding to the terminal device. This is not limited. The terminal device is used as an example. The method may specifically include: The terminal device receives a second message from a network device, where the second message includes indication information of a first tracking area and identification information of a first access type corresponding to the first tracking area; and determines, based on the second message, that the first access type is unusable in the first tracking area.

In this embodiment of this application, the network device may be an access network device or a core network device. If the access network device generates the second message and sends the second message to the terminal device, the second message may be an access stratum (AS) message, for example, a radio resource control setup RRC setup message, a radio resource control reestablishment RRC reestablishment message, a radio resource control release RRC release message, or a radio resource control reconfiguration RRC reconfiguration message. If the core network device generates the second message and sends the second message to the terminal device, the second message may be a non-access stratum (NAS) message, for example, a registration accept registration accept message, a registration reject registration reject message, a protocol data unit PDU session establishment accept message, or a PDU session modification accept message.

The indication information of the first tracking area may be an address/identity of the first tracking area, or the like, or may be other information that may indicate the first area. This is not specifically limited in this application. The first access type corresponding to the first tracking area may be a low-priority access type (or a low-security access type), or may be a high-priority access type. This is not limited. For example, the first access type may be a second generation radio access network 2G GERAN, a third generation universal mobile telecommunications system terrestrial radio access network 3G UTRAN, a fourth generation evolved universal mobile telecommunications system terrestrial radio access network 4G E-UTRAN, fifth generation new radio 5G NR, or the like. The first access type may further include an access type corresponding to a future communication network, for example, an access type corresponding to a sixth generation 6G communication network/an extended access type of a 6G communication network.

In the solution of this application, to ensure security of communication with the terminal device, the network device may indicate, to the terminal device by using the second message based on an actual situation of an access type in the first tracking area, the identification information of the first access type that is unusable in the first tracking area. After receiving the second message, the terminal device may determine that the first access type is unusable in the first tracking area, so that when the terminal device is located in the first tracking area, the terminal device cannot use the first access type to access/hand over to/select/reselect/camp on a corresponding network, to effectively ensure security of communication between the terminal device and a real network.

In a possible implementation, the method further includes: The terminal device sends capability information of the terminal device to the network device, where the capability information of the terminal device indicates that the terminal device supports turning on or turning off a function corresponding to a corresponding access type.

In this embodiment of this application, if the access network device provides the terminal device with information about an access type that is unusable in a tracking area, the terminal device may report, to the access network device through an air interface, whether the terminal device supports turning on/turning off (activating/deactivating, enabling/disabling) the function corresponding to the access type. If the core network device provides the terminal device with information about an access type that is unusable in a tracking area, the terminal device may include the capability information of the terminal device in the non-access stratum NAS message (for example, a registration request message), and send the capability information to the core network device, to effectively report, to the core network device, whether the terminal device supports turning on/turning off (activating/deactivating, enabling/disabling) the function corresponding to the access type.

In this implementation, the network device effectively learns whether turning on/turning off (activating/deactivating, enabling/disabling) of the function corresponding to the access type is supported, so that the network device can effectively provide the terminal device with the corresponding access type that is unusable in the tracking area.

In a possible implementation, the method further includes: The terminal device turns off, in the first tracking area, a functional module corresponding to the first access type, or ignores a signal and a system message that correspond to the first access type. In this embodiment of this application, the terminal device may further deactivate/disable, in the first tracking area, a function corresponding to the first access type of the terminal device, so that the terminal device cannot use the first access type. However, this is not limited.

In this implementation, it can be ensured that the terminal device cannot access the corresponding access network device by using the first access type.

In a possible implementation, the second message further includes indication information of a second tracking area and identification information of a second access type corresponding to the second tracking area. The second access type is a low-priority access type (or a low-security access type). For example, the second access type is one or more of the following: the second generation radio access network 2G GERAN, the third generation universal mobile telecommunications system terrestrial radio access network 3G UTRAN, the fourth generation evolved universal mobile telecommunications system terrestrial radio access network 4G E-UTRAN, and the fifth generation new radio 5G NR. Similarly, the second access type may further include the access type corresponding to the future communication network, for example, the access type corresponding to the sixth generation 6G communication network/the extended access type of the 6G communication network.

In this embodiment of this application, the network device may provide the terminal device with indication information of one or more tracking areas and identification information of at least one access type corresponding to each tracking area (a quantity of tracking areas that can be provided by the network device and a quantity of access types corresponding to each tracking area are not specifically limited in this application).

In this implementation, the network device may provide the terminal device with more access types that are unusable and that correspond to the tracking area, to ensure security of network access of the terminal device in a larger range.

According to a sixth aspect, an embodiment of this application provides a communication method. The method may be performed by a network device, or may be performed by a chip or a chip system corresponding to the network device. This is not limited. The network device is used as an example. The method may specifically include: The network device generates a second message, where the second message includes indication information of a first tracking area and identification information of a first access type corresponding to the first tracking area; and the network device sends the second message to a terminal device.

In this embodiment of this application, the network device may be an access network device or a core network device. If the access network device generates the second message and sends the second message to the terminal device, the second message may be an access stratum (AS) message, for example, a radio resource control setup RRC setup message, a radio resource control reestablishment RRC reestablishment message, a radio resource control release RRC release message, or a radio resource control reconfiguration RRC reconfiguration message. If the core network device generates the second message and sends the second message to the terminal device, the second message may be a non-access stratum (NAS) message, for example, a registration accept registration accept message, a registration reject registration reject message, a protocol data unit PDU session establishment accept message, or a PDU session modification accept message.

The indication information of the first tracking area may be an address/identity of the first tracking area, or the like, or may be other information that may indicate the first area. This is not limited in this application. The first access type may be a low-priority access type (or a low-security access type). For example, the first access type is but is not limited to a second generation radio access network 2G GERAN, a third generation universal mobile telecommunications system terrestrial radio access network 3G UTRAN, a fourth generation evolved universal mobile telecommunications system terrestrial radio access network 4G E-UTRAN, or fifth generation new radio 5G NR. The first access type may further include an access type corresponding to a future communication network, for example, an access type corresponding to a sixth generation 6G communication network/an extended access type of a 6G communication network.

In the solution of this application, the network device may indicate, to the terminal device by using the second message, the identification information of the first access type that is unusable in the first tracking area; and the terminal device may determine, based on the second message, that the first access type is unusable in the first tracking area. Generally, security performance of a network corresponding to the low-priority access type is weak. According to the solution of this application, when the terminal device is located in the tracking area, the terminal device can be effectively prevented from accessing/handing over to/selecting/reselecting/camping on a low-priority network by using the first access type, so that communication security of the terminal device can be ensured.

In a possible implementation, the method further includes: The network device receives capability information of the terminal device, where the capability information of the terminal device indicates that the terminal device supports turning on or turning off a function corresponding to an access type.

In this embodiment of this application, if the access network device provides the terminal device with information about an access type that is unusable in a tracking area, the terminal device may report, to the access network device through an air interface, whether the terminal device supports enabling/disabling (activating/deactivating, enabling/disabling) the function corresponding to the access type. If the core network device provides the terminal device with information about an access type that is unusable in a tracking area, the terminal device may include the capability information of the terminal device in the non-access stratum NAS message (for example, a registration request registration request message), and send the capability information to the core network device, to effectively report, to the core network device, whether the terminal device supports turning on/turning off (activating/deactivating, enabling/disabling) the function corresponding to the access type.

In this implementation, the network device effectively learns whether turning on/turning off (activating/deactivating, enabling/disabling) of the function corresponding to the access type is supported, so that the network device can effectively provide the terminal device with the corresponding access type that is unusable in the tracking area.

In a possible implementation, the second message further includes indication information of a second tracking area and identification information of a second access type corresponding to the second tracking area. For example, the second access type may be but is not limited to the second generation radio access network 2G GERAN, the third generation universal mobile telecommunications system terrestrial radio access network 3G UTRAN, the fourth generation evolved universal mobile telecommunications system terrestrial radio access network 4G E-UTRAN, or the fifth generation new radio 5G NR. The second access type may further include the access type corresponding to the future communication network, for example, the access type corresponding to the sixth generation 6G communication network/the extended access type of the 6G communication network.

In this embodiment of this application, the network device may provide the terminal device with indication information of one or more tracking areas and identification information of at least one access type corresponding to each tracking area (a quantity of tracking areas that can be provided by the network device and a quantity of access types corresponding to each tracking area are not specifically limited in this application).

In this implementation, the network device may provide the terminal device with more access types that are unusable and that correspond to the tracking area, to ensure security of network access of the terminal device in a larger range.

According to a seventh aspect, an embodiment of this application further provides a communication apparatus. The apparatus may be configured to perform the method according to the first aspect/third aspect/fifth aspect. The apparatus may be a terminal device, or the apparatus may be a component (for example, a chip, a chip system, or a circuit) in the terminal device, or may be an apparatus that can be used together with the terminal device.

In a possible implementation, the apparatus may include modules or units that are in one-to-one correspondence with the method/operations/steps/actions described in the first aspect/third aspect/fifth aspect. The modules or units may be hardware circuits, may be software, or may be implemented by hardware circuits in combination with software. In a possible implementation, the apparatus may include a processing unit (which may also be referred to as a processing module) and a communication unit (which may also be referred to as a communication module). The communication unit may be configured to perform a receiving function and/or a sending function, and the processing unit may be configured to perform the method according to any one of the first aspect/third aspect/fifth aspect or the possible implementations of the first aspect.

According to an eighth aspect, an embodiment of this application further provides a communication apparatus. The apparatus may be configured to perform the method according to the second aspect/fourth aspect/sixth aspect. The apparatus may be a network device, or the apparatus may be a component (for example, a chip, a chip system, or a circuit) in the network device, or may be an apparatus that can be used together with the network device.

In a possible implementation, the apparatus may include modules or units that are in one-to-one correspondence with the method/operations/steps/actions described in the second aspect/fourth aspect/sixth aspect. The modules or units may be hardware circuits, may be software, or may be implemented by hardware circuits in combination with software. In a possible implementation, the apparatus may include a processing unit (which may also be referred to as a processing module) and a communication unit (which may also be referred to as a communication module). The communication unit may be configured to perform a receiving function and/or a sending function, and the processing unit may be configured to perform the method according to any one of the second aspect or the possible implementations of the second aspect/fourth aspect/sixth aspect.

According to a ninth aspect, an embodiment of this application provides an apparatus. The apparatus includes at least one processor and a communication interface. The communication interface is configured to communicate with another apparatus. The processor is configured to run a group of programs, to cause the apparatus to implement the method provided in any one of the first aspect or the possible implementations of the first aspect, the method provided in any one of the second aspect or the possible implementations of the second aspect, the method provided in any one of the third aspect or the possible implementations of the third aspect, the method provided in any one of the fourth aspect or the possible implementations of the fourth aspect, the method provided in any one of the fifth aspect or the possible implementations of the fifth aspect, or the method provided in any one of the sixth aspect or the possible implementations of the sixth aspect.

According to a tenth aspect, an embodiment of this application further provides a computer-readable storage medium. The storage medium stores a software program. When the software program is read and executed by one or more processors, the method provided in any one of the first aspect or the possible implementations of the first aspect may be implemented, the method provided in any one of the second aspect or the possible implementations of the second aspect is implemented, the method provided in any one of the third aspect or the possible implementations of the third aspect is implemented, the method provided in any one of the fourth aspect or the possible implementations of the fourth aspect is implemented, the method provided in any one of the fifth aspect or the possible implementations of the fifth aspect is implemented, or the method provided in any one of the sixth aspect or the possible implementations of the sixth aspect is implemented.

According to an eleventh aspect, an embodiment of this application further provides a computer program product including instructions. When the computer program product runs on a computer, the method provided in any one of the first aspect or the possible implementations of the first aspect is performed, the method provided in any one of the second aspect or the possible implementations of the second aspect is performed, the method provided in any one of the third aspect or the possible implementations of the third aspect is performed, the method provided in any one of the fourth aspect or the possible implementations of the fourth aspect is performed, the method provided in any one of the fifth aspect or the possible implementations of the fifth aspect is performed, or the method provided in any one of the sixth aspect or the possible implementations of the sixth aspect is performed.

According to a twelfth aspect, an embodiment of this application provides a communication system, including a terminal device that can implement the method provided in the first aspect or the third aspect, and a network device (that is, an access network device and/or a core network device) that can implement the method provided in the second aspect or the fourth aspect.

According to a thirteenth aspect, an embodiment of this application further provides a chip system. The chip system includes a processor, configured to support a terminal device in implementing a function in the first aspect or the third aspect, or configured to support a network device in implementing a function in the second aspect or the fourth aspect.

In a possible design, the chip system further includes a storage. The storage is configured to store program instructions and data that are necessary for execution of a loading apparatus. The chip system may include a chip, or may include a chip and another discrete component.

It should be noted that, for technical effects that can be achieved in any one of the seventh aspect to the thirteenth aspect or the possible implementations of the seventh aspect to the thirteenth aspect, correspondingly refer to descriptions of technical effects that can be achieved in any one of the first aspect to the sixth aspect or the possible implementations of the first aspect to the sixth aspect. Details are not described herein again.

### BRIEF DESCRIPTION OF DRAWINGS

FIG. 1 is a diagram of an attack from a false base station in a high standard;
FIG. 2 is a diagram of an architecture of a communication system to which a method according to an embodiment of this application may be applicable;
FIG. 3A is a schematic flowchart of a communication method according to an embodiment of this application;
FIG. 3B is a schematic flowchart of another communication method according to an embodiment of this application;
FIG. 4 is a schematic flowchart of a first embodiment according to an embodiment of this application;
FIG. 5 is a schematic flowchart of a second embodiment according to an embodiment of this application;
FIG. 6 is a schematic flowchart of a third embodiment according to an embodiment of this application;
FIG. 7 is a diagram of a structure of a communication apparatus according to an embodiment of this application;
FIG. 8 is a diagram of a structure of another communication device according to an embodiment of this application; and
FIG. 9 is a diagram of a structure of a chip according to an embodiment of this application.

### DESCRIPTION OF EMBODIMENTS

The following clearly and completely describes the technical solutions in embodiments of this application with reference to the accompanying drawings in embodiments of this application. Terms used in the following embodiments are merely intended to describe specific embodiments, but are not intended to limit this application. The terms "one", "a", "the", and "this" of singular expression forms used in the specification and the appended claims of this application are also intended to include expression forms such as "one or more", unless otherwise specified in the context clearly. It should be further understood that, in embodiments of this application, "one or more" means one, two, or more, and "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects.

Reference to "an embodiment", "some embodiments", or the like described in this specification means that one or more embodiments of this application include a specific feature, structure, or characteristic described with reference to the embodiment. The terms "include", "comprise", and "have" in this application and their variants all mean "include but are not limited to", unless otherwise specifically emphasized in another manner. The term like "example" or "for example" indicates an example, an illustration, or descriptions. Any embodiment or design scheme described with "example" or "for example" should not be explained as being more preferred or having more advantages than another embodiment or design scheme. The term like "example" or "for example" is used to present a related concept in a specific manner for ease of understanding.

"A plurality of" in embodiments of this application means two or more. It should be noted that, in the descriptions of embodiments of this application, terms such as "first" and "second" are merely intended for distinction and description, but cannot be understood as an indication or implication of relative importance, or as an indication or implication of an order. In addition, the term "indicating" mentioned in the descriptions of embodiments of this application may include directly indicating and indirectly indicating. When a piece of indication information indicates A, the indication information may directly indicate A or indirectly indicate A, but it does not indicate that the indication information definitely carries A.

In embodiments of this application, a "value" may be a specific value. For example, that a terminal device sets a value of access information means that the terminal device sets a value corresponding to the access information. The "value" may alternatively be correspondingly replaced with a "numeric value" or the like.

To better understand the solutions provided in embodiments of this application, the following first explains and describes application scenarios, related technologies, and terms of embodiments of this application. It should be noted that these explanations are intended to make embodiments of this application easier to understand, but should not be construed as a limitation on the protection scope claimed in this application.

### 1. Attack from a false base station

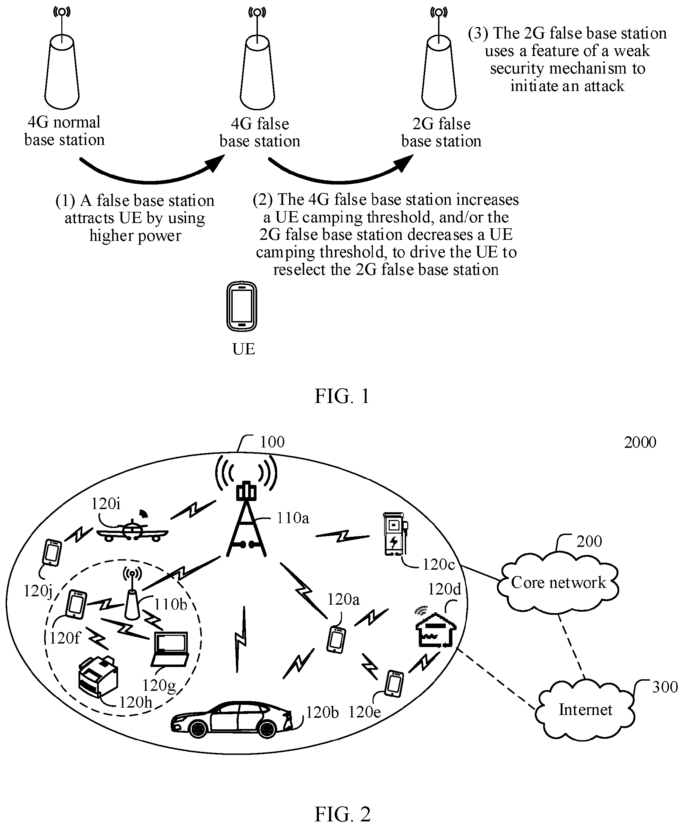

Traditional base stations in a low standard (for example, 2G/3G base stations) have many disadvantages in protocol security design. Therefore, these base stations are often attacked by the false base station. Although security of a currently used base station in a high standard is greatly improved, there is still an attack from the false base station. As shown in FIG. 1, it is assumed that there are both a 2G signal and a 4G signal in space. Generally, terminal UE preferentially selects/camps on a 4G cell, and a false base station in a low standard may hand over the terminal (UE) by using the following steps.
(1) An attacker may forge a base station in a high standard, for example, a 4G false base station. Signal transmit power of the 4G false base station is higher than signal transmit power of a surrounding normal base station in a high standard (for example, a normal 4G base station). In this way, the UE is attracted by the 4G false base station, and choose to camp on the 4G false base station with higher signal strength.
(2) The 4G false base station may send some parameters to the UE by broadcasting a system message. These parameters include a condition that needs to be satisfied when the UE needs to camp on/select a 4G standard, and a condition that needs to be satisfied when the UE needs to hand over to/reselect/camp on a 2G standard. The false base station may set a value of a parameter P1 (for example, a parameter ThreshServing, _{LowP}) related to controlling the UE to select/camp on 4G to a high value, and/or set a value of a parameter P2 (for example, a parameter Qᵣₓₗₑᵥₘᵢₙ) related to controlling the UE to hand over to/reselect/camp on 2G to a low value. In this way, a threshold for the UE to camp on 4G is increased, and a threshold for the UE to hand over to/reselect/camp on 2G is decreased. In this case, the attacker further forges a base station in a low standard, for example, a 2G false base station. In this way, the UE is likely to hand over to the 2G false base station.
   The parameter ThreshServing, _{LowP} indicates a minimum threshold of reference signal received power (reference signal received power, RSRP) for serving cell reselection. The parameter Qᵣₓₗₑᵥₘᵢₙ indicates a minimum received signal level of a serving cell, that is, a minimum reference signal level allowed to access the serving cell.
(3) The false 2G base station may use a feature of a weak security mechanism of 2G to initiate a conventional attack from the 2G false base station to the UE, so that information and/or data of the UE are/is stolen by the attacker.

In embodiments of this application, the "false base station" is also referred to as a "pseudo base station" or a "fake base station". The false base station is an illegal radio communication device that uses a defect of unidirectional authentication in a global for mobile communications (global system for mobile communications, GSM), and mainly includes a host and a notebook computer. The false base station can search for information about a GSM user terminal (for example, information about a mobile phone) that is centered on the false base station and that is within a specific radius range, and can forcibly send junk messages such as fraud and promotion messages to the user terminal by arbitrarily faking information about another person. Therefore, when the false base station is running, a signal of a user is forcibly connected to the device. This not only causes data/information leakage of a user, but also causes the user to fail to connect to a public network (that is, a real network). Consequently, normal communication of the user is affected.

### 2. Standards in embodiments of this application

With continuous development of mobile communication technologies and network specifications, currently defined communication network standards include 5G, 4G, 3G, 2G, and the like. Generally, a newer developed technology indicates a higher level or priority. In addition, network security of a high-priority/high-level standard is higher than that of a low-priority/low-level standard. When a terminal device has an access capability of a high-level standard and a low standard, if there are networks/cells/signals in both the high-level standard and a low-level standard in space in which the terminal device is located, the terminal device preferentially attempts to access the high-level standard.

In embodiments of this application, the high-level standard (which may also be referred to as a high standard or a high-priority standard) and the low-level standard (which may also be referred to as a low standard or a low-priority standard) may be classified based on priorities of the standards. A higher priority indicates a higher level. The high-level standard and the low-level standard may be two types of different standards that have been defined currently. For example, the high-level standard is a 4G/5G standard, and the low-level standard is a 2G/3G standard. Alternatively, the high-level standard and the low-level standard may be two types of standards with different priorities in a same standard that have been defined currently, for example, a finer-grained 4G standard 1 and 4G standard 2 in a 4G standard. If a priority of the 4G standard 2 is higher than a priority of the 4G standard 1, the 4G standard 2 is used as the high-level standard, and the 4G standard 1 is used as the low-level standard.

In embodiments of this application, the current 4G/5G may not be fixedly used as the high-level standard, and the current 2G/3G may not be fixedly used as the low-level standard, but setting may be flexibly performed based on priorities. For example, generally, 4G/5G is the high-level standard, and 2G/3G is the low-level standard. However, in a scenario in which there are only 4G and 5G, 5G is the high-level standard, and 4G is the low-level standard. In a scenario in which there are only 2G and 3G, 3G is the high-level standard, and 2G is the low-level standard.

In embodiments of this application, the priorities of the standards may be set by a network, a terminal vendor, or a user. For example, the user considers that a 5G package is expensive, and therefore sets 4G as the high-priority standard. For a same terminal device at a same moment, the high-priority standard and the low-priority standard may overlap.

In addition, when the terminal accesses networks in different standards, standards of used access types are also different. Access types in different standards in embodiments of this application may include NR (5G), 4G-E-UTRA, 3G-UTRAN, 2G-GERAN, an access type corresponding to a future network in a higher standard (for example, an access type/an extended access type corresponding to a sixth generation 6G network), and the like. In embodiments of this application, a high-priority access type and a priority access type are defined. Similar to the foregoing communication network standards, the high-priority access type corresponds to a communication network in a high-priority standard, and the low-priority access type corresponds to a communication network in a low-priority standard.

### 3. System information (which may also be referred to as a system message)

The system information is information periodically broadcast by a base station in a downlink, and content in the system information includes basic configuration information of the base station, a key parameter of an air interface (a Uu interface) protocol layer, and the like. Therefore, the system information is very important to UE. After UE in any mobile communication system is started up (powered on), the UE first needs to read a system message of a cell, and then can perform operations such as cell selection, reselection, and PLMN selection. 5G UE is no exception.

The system information mainly includes a master information block (master information block, MIB), a system information block (system information block, SIB), and a positioning system information block. The master information block includes a part of most important and most frequently transmitted parameters that need to be obtained by a terminal from an accessed cell, for example, a downlink bandwidth configuration and a system frame number. The system information block includes a plurality of different information blocks. A system information block 1 is used as an example, and includes a public land mobile network identifier, a tracking area number, a cell identifier, cell selection information, and the like. The positioning system information block mainly includes a positioning-related parameter, for example, a base station position. Because content in the positioning system information may change at any time as a position of the terminal changes, the system information used to calculate a hash value in this application includes only the master information block and/or the system information block.

In view of the foregoing problem that the terminal device is vulnerable to the attack from the false base station (an unreal network/a malicious network/an insecure network), this application provides a communication method. In the method, the terminal device can be prevented from being attacked by the unreal network/malicious network/insecure network, and security of communication between the terminal device and the real network can be effectively ensured.

Embodiments of this application are applicable to a wireless communication system. The wireless communication system may comply with a wireless communication standard of a third generation partnership project (third generation partnership project, 3GPP), or may comply with another wireless communication standard, for example, a wireless communication standard of the 802 series (for example, 802.11, 802.15, or 802.20) of the institute of electrical and electronics engineers (institute of electrical and electronics engineers, IEEE).

The technical solutions in embodiments of this application may be applied to various communication systems, for example, a global system for mobile communications (global system for mobile communications, GSM), code division multiple access (code division multiple access, CDMA), a general packet radio service (general packet radio service, GPRS), enhanced data rates for GSM evolution (enhanced data rates for GSM Evolution, EDGE), interim standard 95 code division multiple access (interim standard95CDMA, IS-95CDMA), wideband code division multiple access (wideband code division multiple access, WCDMA), CDMA2000, time division synchronous code division multiple access (time division synchronous code division multiple access, TD-SCDMA), LTE, a universal mobile telecommunications system (universal mobile telecommunications system, UMTS), a worldwide interoperability for microwave access (worldwide interoperability for microwave access, WiMAX) communication system, a 5G communication system, and a future communication system. LTE includes time division duplex LTE (LTE TDD, or referred to as TD-LTE) and frequency division duplex LTE (LTE FDD). The method is further applicable to an internet of vehicles communication system and a satellite communication system.

Systems in two standards including the TD-SCDMA and the WCDMA are universal mobile telecommunications systems (universal mobile telecommunications systems, UMTSs) of a 3G mobile phone technology, and the UMTS is issued by a standardization organization 3GPP (The 3rd Generation Partnership Project, 3rd Generation Partnership Project). A network structure of the UMTS may be divided into a UMTS terrestrial radio access network (UMTS terrestrial radio access network, UTRAN) and a core network (core network, CN). In an UTRAN architecture, a radio access network (radio access network, RAN) is divided into a plurality of radio network subsystems (radio network subsystems, RNSs), and each RNS includes one radio network controller (radio network controller, RNC) and one or more NodeBs (base stations). The RNC is configured to be responsible for allocating, reconfiguring, and releasing a radio resource in the RNS. The NodeB is a node having a wireless transceiver function, supports an air interface of a wireless terminal device within a cell range of the NodeB, and provides a service for a cell. The NodeB and the RNC communicate with each other through an Iub interface, and RNCs may be directly physically connected or interconnected through an interface of any virtual network suitable for being used as a transport network.

Unless otherwise specified, 2G networks usually include a GSM, CDMA, a GPRS, EDGE, and IS-95CDMA. 3G networks usually include TD-SCDMA, WCDMA, CDMA2000, and a CDMA2000 upgrade. A 4G network includes a long term evolution (long term evolution, LTE) technology. A 5G network includes new radio (new radio, NR). Currently, the terminal device may also support a plurality of networks, so that roaming can be implemented in the plurality of networks.

FIG. 2 shows an architecture of a possible and non-limiting communication system to which an embodiment of this application is applicable. As shown in FIG. 2, a communication system 2000 may include a radio access network 100. The radio access network 100 may include at least one access network device (for example, 110a, 110b, and 110c in FIG. 2), and may further include at least one terminal device (for example, 120a to 120j in FIG. 2). FIG. 2 is merely a diagram. The communication system 2000 may further include a core network 200, an internet 300, and another communication device, for example, may further include a wireless relay device and a wireless backhaul device. The terminal device is connected to the access network device in a wireless manner. The access network device may be connected to the core network 200 in a wireless or wired manner. A core network device in the core network 200 and each access network device may separately be different physical devices, or may be a same physical device that integrates a logical function of the core network and a logical function of the radio access network.

A network device provided in this embodiment of this application may be an access network device, for example, a base station (base station), a NodeB (NodeB), an evolved NodeB (evolved NodeB, eNodeB, or eNB), a transmission reception point (transmission reception point, TRP), a next generation NodeB (next generation NodeB, gNB) in a fifth generation (5th generation, 5G) mobile communication system, an access network device in an open radio access network (open radio access network, O-RAN or open RAN), a next generation base station in a sixth generation (6th generation, 6G) mobile communication system, a base station in a future mobile communication system, or an access node in a wireless fidelity (wireless fidelity, Wi-Fi) system. Alternatively, the network device may be a module or unit that completes a part of functions of the base station, for example, may be a central unit (central unit, CU), a distributed unit (distributed unit, DU), a central unit control plane (CU control plane, CU-CP) module, or a central unit user plane (CU user plane, CU-UP) module. The network device may be a satellite (for example, 110a in FIG. 2), a macro base station (for example, 110b in FIG. 2), a micro base station or an indoor station (for example, 110c in FIG. 2), a relay node, a donor node, or the like. A specific communication technology and a specific device form used by the network device are not limited in this application. For ease of description, the following uses the network device as an example for description.

It should be noted that in different systems, the CU (or the CU-CP and the CU-UP) or the DU may alternatively have different names, but a person skilled in the art may understand meanings of the names. For example, in an open radio access network (O-RAN) system, a CU may also be referred to as an O-CU (open CU), a DU may also be referred to as an O-DU, a CU-CP may also be referred to as an O-CU-CP, a CU-UP may also be referred to as an O-CU-UP, and an RU may also be referred to as an O-RU. For ease of description, this application uses the CU, the CU-CP, the CU-UP, the DU, and the RU as examples for description. Any unit of the CU (or the CU-CP and the CU-UP), the DU, and the RU in this application may be implemented by using a software module, a hardware module, or a combination of a software module and a hardware module.

The terminal device provided in this embodiment of this application may also be referred to as a terminal, and includes but is not limited to user equipment (user equipment, UE), a mobile station, a mobile terminal, or the like. The terminal device may be widely used in various scenarios for communication. For example, the scenario includes but is not limited to at least one of the following scenarios: enhanced mobile broadband (enhanced mobile broadband, eMBB), ultra-reliable low-latency communication (ultra-reliable low-latency communication, URLLC), massive machine-type communications (massive machine-type communications, mMTC), device-to-device (device-to-device, D2D) communication, vehicle to everything (vehicle to everything, V2X) communication, machine-type communication (machine-type communication, MTC), internet of things (internet of things, IoT), virtual reality, augmented reality, industrial control, autonomous driving, telemedicine, a smart grid, smart furniture, smart office, a smart wearable, smart transportation, a smart city, or the like. The terminal device may be a mobile phone (for example, a mobile phone 120a, 120d, 120f, or 120j in FIG. 2), a tablet computer, a computer having a wireless transceiver function (for example, a computer 120g in FIG. 2), a wearable device, a vehicle (for example, 120b shown in FIG. 2), an uncrewed aerial vehicle, a helicopter, an airplane, a ship (for example, a ship 120i in FIG. 2), a robot, a mechanical arm, a smart home device (for example, a printer 120h in FIG. 2), or the like. A specific communication technology and a specific device form used by the terminal device are not limited in this application. For ease of description, the following uses the terminal device as an example for description.

The network device and/or the terminal device may be at fixed positions, or may be movable. The network device and/or the terminal device may be deployed on land, including an indoor or outdoor device, a handheld device, or a vehicle-mounted device; may be deployed on water; or may be deployed on an airplane, a balloon, and a satellite in the air. Environments/scenarios in which the network device and the terminal device are located are not limited in this application. The network device and the terminal device may be deployed in a same environment/scenario or different environments/scenarios. For example, the network device and the terminal device are both deployed on land. Alternatively, the network device is deployed on land, and the terminal device is deployed on water or the like. Examples are not enumerated one by one.

In embodiments of this application, the term "system" and "network" may be mutually replaced. The system architecture described in embodiments of this application is intended to describe the technical solutions in embodiments of this application more clearly, and does not constitute a limitation on the technical solutions provided in embodiments of this application. A person of ordinary skill in the art may know that, with evolution of a network architecture, the technical solutions provided in embodiments of this application are also applicable to a similar technical problem.

The following describes the technical solutions of this application with reference to specific embodiments.

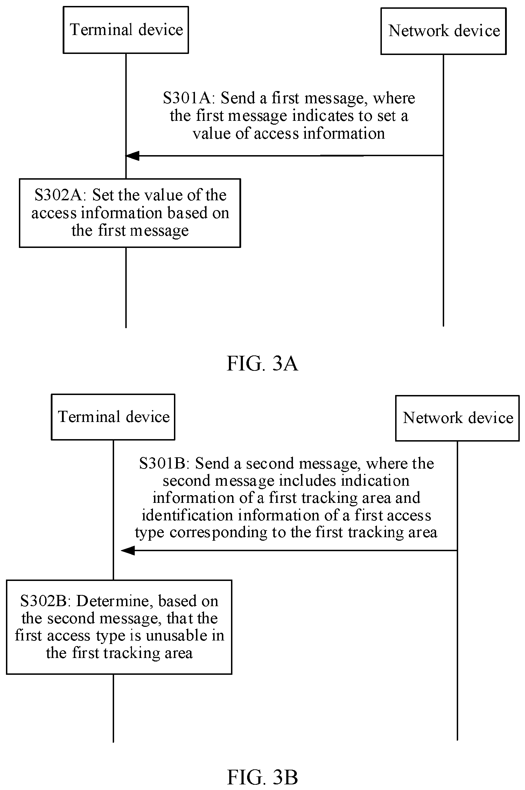

An embodiment of this application provides a communication method. The method is applicable to but is not limited to the communication system shown in FIG. 2. The method may be performed by a terminal device and a network device; the method may be performed by components (modules, chips, or the like) in the terminal device and the network device; or the method may be performed by corresponding apparatuses that are used together with the terminal device and the network device. Both specific forms and quantities of the terminal device and the network device are not specifically limited in this embodiment of this application. Refer to FIG. 3A. A specific procedure of the method is as follows.

S301A: The network device sends a first message to the terminal device, where the first message indicates to set a value of access information. Correspondingly, the terminal device receives the first message from the network device.

In a possible implementation, the first message indicates to set a power threshold corresponding to a first access type to a first preset value.

For example, the power threshold may be a minimum threshold of reference signal received power RSRP when the UE reselects a serving cell. For example, the first preset value is 6, that is, a parameter ThershServing, _{LowP}=6 dB.

In a possible implementation, the network device may generate the first message.

In this embodiment of this application, the network device may be an access network device or a core network device. If the access network device generates the first message and sends the first message to the terminal device, the first message may be an access stratum (access stratum, AS) message, for example, a radio resource control setup RRC setup message, a radio resource control (radio resource control, RRC) reestablishment message, a radio resource control release RRC release message, or a radio resource control reconfiguration RRC reconfiguration message. If the core network device generates the first message and sends the first message to the terminal device, the first message may be a non-access stratum (non-access stratum, NAS) message, for example, a registration accept registration accept message, a registration reject registration reject message, a protocol data unit PDU session establishment accept message, or a protocol data unit (protocol data unit, PDU) session modification accept message.

A system message is key information for connecting a mobile terminal device to a network. The system message provides the terminal device with all necessary information (parameters) needed for accessing the network. The access information in this embodiment of this application is information or a parameter that is in the system message and that is needed by the terminal device to be connected to (including access/hand over to/select/reselect/camp on) the network. For example, the access information may be but is not limited to a power threshold corresponding to an access type and/or a frequency priority corresponding to the access type.

In a possible implementation, before receiving the first message from the network device, the terminal device sends capability information of the terminal device to the network device, where the capability information of the terminal device indicates that the terminal device supports setting the value of the access information. In other words, for the access information, the terminal device may not use a value provided in the system information, but supports setting the access information to another preset value.

In this embodiment of this application, if a reporting destination of the terminal device is the access network device, the terminal device may include the capability information of the terminal device in the access stratum AS message (for example, an RRC setup request message or an RRC control resource release request message) through an air interface, to send the capability information to the access network device. If a reporting destination of the terminal device is the core network device, the terminal device may include the capability information of the terminal device in the non-access stratum NAS message (for example, a registration request registration request message), to send the capability information to the core network device.

In a possible implementation, the first message includes first indication information, and the first indication information indicates the terminal device to set the power threshold corresponding to the first access type to the first preset value. The first access type is a low-priority access type. For example, the first access type may be but is not limited to a second generation radio access network 2G GERAN or a third generation universal mobile telecommunications system terrestrial radio access network 3G UTRAN. In this implementation, the terminal device can be prevented from being attacked by an unreal network/a malicious network/an insecure network due to connection to a low-priority network, and communication security of the terminal device can be effectively ensured.

In an implementation, the first indication information further indicates to set a power threshold corresponding to a second access type to a second preset value. The second access type is a high-priority access type. For example, the second access type may be but is not limited to a fourth generation evolved universal mobile telecommunications system terrestrial radio access network 4G E-UTRAN or fifth generation new radio 5G NR. Alternatively, the second access type may be an access type corresponding to a future communication network, for example, an access type corresponding to a sixth generation 6G communication network/an extended access type of the 6G communication network. In this implementation, the terminal device can be more easily connected to a high-priority network, so that communication security of the terminal device can be ensured.

In a possible implementation, the first message may further include the first preset value and/or the second preset value.

S302A: The terminal device sets the value of the access information based on the first message.

In an implementation, that the terminal device sets, based on the first indication information in the first message, the power threshold corresponding to the first access type may include but is not limited to the following manners.

Manner 1: The terminal device sets, based on an indication of the first message, the power threshold corresponding to the first access type to the first preset value (that is, a preset/pre-agreed value).

Manner 2: The first message includes the power threshold corresponding to the first access type, that is, the first preset value. In this case, the terminal device may use the first preset value in the first message as a value of the power threshold corresponding to the first access type, and perform setting.

In this embodiment of this application, because the first access type is a low-priority access type, to prevent a security problem caused because the terminal device can access/hand over to/select/reselect/camp on an access network device/a network of the first access type, the power threshold corresponding to the access network device needs to be set to a large value, that is, the first preset value should be a large value.

In a possible implementation, when the first indication information further indicates to set the power threshold corresponding to the second access type to the second preset value, the terminal device may further set, based on the first indication information, the power threshold corresponding to the second access type to the second preset value (that is, a preset/pre-agreed value)

If the first message includes the second preset value, the terminal device may use the second preset value in the first message as the power threshold corresponding to the second access type, and perform setting.

In this embodiment of this application, because the second access type is a high-priority access type, to make the terminal device more easily access an access network device/a network of the second access type, so as to ensure security of the terminal device, the power threshold corresponding to the second access type should be set to a small value, that is, the second preset value should be a small value. This is equivalent to decreasing a threshold for the terminal device to access/hand over to/select/reselect/camp on the access network device/network of the second access type.

In addition, the system message provided (broadcast) by the network device usually includes the power threshold corresponding to the first access type and/or the power threshold corresponding to the second access type. After receiving the first message from the network device (the access network device or the core network device), the terminal device ignores (does not use) the corresponding power threshold provided in the system information, and flexibly sets, based on an indication of the network device, the value of the power threshold corresponding to the first access type and/or a value of the power threshold corresponding to the second access type.

In this embodiment of this application, the network device (the access network device/the core network device) may flexibly indicate, based on an actual situation of the first access type and/or an actual situation of the second access type, the terminal device to set the power threshold corresponding to the first access type and/or the power threshold corresponding to the second access type. In addition, the method may be applied to a random access procedure, a handover procedure, a reselection procedure, a selection procedure, a camping procedure, and the like of the terminal device. According to the method, the terminal device can be effectively indicated to preferentially access/hand over to/select/reselect/camp on a high-priority (that is, high-security) network device/network, and be prevented from accessing/handing over to/selecting/reselecting/camping on a low-priority (that is, low-security) network device/network, so that security of the terminal device can be ensured.

In some embodiments, the first message may further include other indication information, indicating the terminal device to set a value of other access information, for example, indicating the terminal device to set a value of a frequency priority corresponding to the first access type and/or set a value of a frequency priority corresponding to the second access type. For details about how the terminal device sets a value of the frequency priority, refer to the foregoing manner in which the terminal device sets a value of the power threshold corresponding to the access type. The details are not described one by one herein again.

For the value of the frequency priority, a larger value usually indicates a higher priority, which is equivalent to a higher requirement/threshold for connecting the terminal device to a corresponding network; and a smaller value indicates a lower priority, which is equivalent to a lower requirement/threshold for connecting the terminal device to the corresponding network. A contrary design may alternatively be used, to be specific, a smaller value indicates a higher priority, which is equivalent to a higher requirement/threshold for connecting the terminal device to a corresponding network; and a larger value indicates a lower priority, which is equivalent to a lower requirement/threshold for connecting the terminal device to the corresponding network. The terminal device sets values of other access information in a similar manner as setting the value of the power threshold corresponding to the access type. All of these values of the access information affect a possibility of connecting the terminal device to the corresponding network.

In this embodiment of this application, if the network device may need to use a plurality of pieces of indication information to indicate the terminal device to set values of a plurality of pieces of access information, the network device may include the plurality of pieces of indication information in a same message, to send the plurality of pieces of indication information to the terminal device, or may include the plurality of pieces of indication information in different messages, to send the plurality of pieces of indication information to the terminal device. The network device may perform flexible configuration based on an actual situation. This is not specifically limited in this application.

In a possible implementation, the network device further sends second indication information to the terminal device, where the second indication information indicates the terminal device to set the value of the access information based on the value in the system information. In this implementation, if the terminal device does not need to be prevented from being attacked by the unreal network/malicious network/insecure network, the terminal device can normally use the system information broadcast by the network device, to implement network connection.

In conclusion, this embodiment of this application provides a communication method. The method includes: The terminal device receives the first message from the network device, where the first message indicates the terminal device to set the value of the access information; and the terminal device sets the value of the access information based on the first message. In the method, the network device indicates the terminal device to flexibly set the value of the access information. In this way, a failure in normal communication caused because the terminal device accesses the low-security network and consequently is attacked by the unreal network can be effectively prevented. According to the method, security of communication between the terminal device and a real network can be effectively ensured.

An embodiment of this application further provides another communication method. The method is also applicable to but is not limited to the communication system shown in FIG. 2. In addition, for corresponding execution bodies configured to implement functions of a network device and a terminal device in the method, refer to the descriptions in FIG. 3A. Details are not described herein again. In addition, a quantity corresponding to the terminal device and a quantity corresponding to the network device are not limited. Refer to FIG. 3B. A specific procedure of the method is as follows.

S301B: The network device sends a second message to the terminal device, where the second message includes indication information of a first tracking area and identification information of a first access type corresponding to the first tracking area.

In a possible implementation, the second message indicates that the first access type is unusable in the first tracking area. In this embodiment of this application, that the second message indicates that the first access type is unusable in the first tracking area may alternatively be correspondingly replaced with but is not limited to the following several expressions:
1. The second message indicates the terminal device to deactivate/disable, in the first tracking area, a function corresponding to the first access type.
2. The second message indicates the terminal device to turn off, in the first tracking area, a functional module corresponding to the first access type in the terminal device.
3. The second message indicates the terminal device to ignore/not to use, in the first tracking area, a signal and a system message that are sent by an access network device of the first access type.

In a possible implementation, the network device generates the second message.

In this embodiment of this application, the network device may be an access network device or a core network device. If the access network device generates a first message and sends the second message to the terminal device, the second message may be an access stratum (AS) message, for example, a radio resource control setup RRC setup message, a radio resource control reestablishment RRC reestablishment message, a radio resource control release RRC release message, or a radio resource control reconfiguration RRC reconfiguration message. If the core network device generates the second message and sends the second message to the terminal device, the second message may be a non-access stratum (NAS) message, for example, a registration accept registration accept message, a registration reject registration reject message, a protocol data unit PDU session establishment accept message, or a PDU session modification accept message.

The indication information of the first tracking area may be an address/identity of the first tracking area, or the like, or may be other information that may indicate the first area. This is not specifically limited in this application. The first access type corresponding to the first tracking area may be a low-priority access type (or a low-security access type), or may be a high-priority access type. This is not limited. For example, the first access type corresponding to the first tracking area may be a second generation radio access network 2G GERAN, a third generation universal mobile telecommunications system terrestrial radio access network 3G UTRAN, a fourth generation evolved universal mobile telecommunications system terrestrial radio access network 4G E-UTRAN, fifth generation new radio 5G NR, or the like. Alternatively, the first access type may be an access type corresponding to a future communication network, for example, an access type corresponding to a sixth generation 6G communication network/an extended access type of the 6G communication network.

In a possible implementation, the second message may further include indication information of a second tracking area (that is, indication information of another tracking area) and identification information of a second access type corresponding to the second tracking area. In this application, the first tracking area is used as an example to describe the solutions. Similar to the first access type, the second access type corresponding to the second tracking area may also be but is not limited to the second generation radio access network 2G GERAN, the third generation universal mobile telecommunications system terrestrial radio access network 3G UTRAN, the fourth generation evolved universal mobile telecommunications system terrestrial radio access network 4G E-UTRAN, or the fifth generation new radio 5G NR. The second access type corresponding to the second tracking area may also be an access type corresponding to a future communication network, for example, the access type corresponding to the sixth generation 6G communication network/the extended access type of the 6G communication network.

In this embodiment of this application, the network device may send the second message to the terminal device. The second message includes a tracking area (tracking area identity, TAI) list (TAI list for short), and the list includes an address/ID of one or more tracking areas and an ID of at least one access type corresponding to each tracking area.

For example, after UE initiates a registration request to a core network, the core network sends a registration accept message to the UE. The registration accept message (equivalent to the second message) includes a registration area list (registration area list) (the registration area list is equivalent to the TAI list), and the registration area list includes an address/ID of one or more valid areas in which the UE currently registers with the core network, and an ID of at least one access type corresponding to each valid area. If moving out of the registration area, the UE needs to re-initiate a registration request to the core network.

In a possible implementation, before the terminal device receives the second message from the network device, the method further includes: The terminal device sends capability information of the terminal device to the network device, where the capability information of the terminal device indicates that the terminal device supports turning on/turning off (or activating/deactivating, or enabling/disabling) a function corresponding to an access type.

For example, if the network device is the core network device, when initiating a registration procedure to the core network device, the terminal device may include the capability information of the terminal device in a registration request (registration request), and send the capability information to the core network device.

S302B: The terminal device determines, based on the second message, that the first access type is unusable in the first tracking area.

In this embodiment of this application, that the terminal device determines, based on the second message, that the first access type is unusable in the first tracking area may be correspondingly replaced with but is not limited to the following several expressions:
1. The terminal device deactivates/disables, in the first tracking area, the function corresponding to the first access type.
2. The terminal device turns off, in the first tracking area, the functional module corresponding to the first access type in the terminal device.
3. The terminal device ignores/does not use, in the first tracking area, the signal and the system message that are sent by the access network device of the first access type.

In this embodiment of this application, the network device (the access network device/the core network device) may flexibly indicate that the terminal device cannot use the first access type in the first tracking area, and this manner may be applied to but is not limited to a random access procedure of the terminal device, and a handover procedure, a reselection procedure, a selection procedure, and a camping procedure of the access network device.

In this embodiment of this application, the terminal device receives, in the first tracking area, the system message sent by the access network device of the first access type, and the terminal device ignores or does not use the system message.

During actual application, the network device (the access network device/the core network device) may further indicate, to the terminal device, an access type corresponding to a tracking area of the terminal device (that is, the second tracking area and the second access type corresponding to the second tracking area). The terminal device may deactivate/disable/turn off, in another tracking area with reference to a processing manner for the first access type corresponding to the first tracking area, a function corresponding to an access type. Details are not described herein again.

In conclusion, this embodiment of this application provides another communication method. The method includes: The terminal device receives the second message from the network device, where the second message includes the indication information of the first tracking area and the identification information of the first access type corresponding to the first tracking area; and the terminal device may determine, based on a second cell, that the first access type is unusable in the first tracking area. In the method, the network device (the access network device/the core network device) may flexibly indicate, to the terminal device, a target tracking area (for example, the first tracking area) and an access type that is unusable in the target tracking area. In this indication manner, the terminal device can be effectively prevented from accessing/handing over to/reselecting/selecting/camping on a low-priority (low-security) network device, to effectively ensure security of communication between the terminal device and a real network.

Based on the communication methods shown in FIG. 3A and FIG. 3B, the following further describes the communication methods in detail by using several specific embodiments.

### Embodiment 1

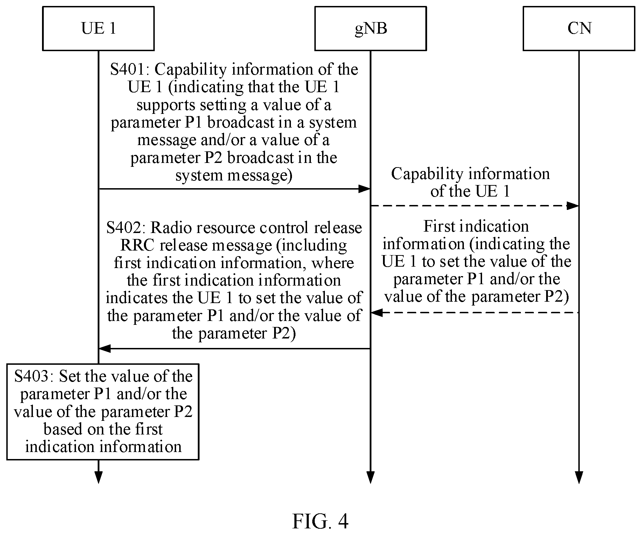

Based on the solution in FIG. 3A, in Embodiment 1, in an example in which a base station gNB (or a core network CN) is used as a network device, and UE 1 is used as a terminal device, the base station gNB (or the core network CN) indicates the UE 1 to set a value of a parameter P1 (for example, ThershServing, _{LowP}) in a system message and/or a value of a parameter P2 (for example, Qᵣₓₗₑᵥₘᵢₙ) in the system message (the parameter P1 and the parameter P2 are equivalent to the access information in the solution in FIG. 3A), to prevent the UE 1 from being attacked due to access to a false base station. Refer to FIG. 4. A procedure of Embodiment 1 is as follows.

S401: The UE 1 sends capability information of the UE 1 to the gNB, where the capability information indicates that the UE 1 supports setting the value of the parameter P1 broadcast in the system message and/or the value of the parameter P2 broadcast in the system message.

For example, the UE 1 may send the capability information to the gNB through an air interface.

In this embodiment, the parameter P1 (for example, ThershServing, _{LowP}) in the system message and/or the parameter P2 (for example, Qᵣₓₗₑᵥₘᵢₙ) in the system message are/is used as a basis for determining whether the UE 1 can access/hand over to/reselect/select/camp on a cell in a corresponding standard. To be specific, the parameter P1 is a parameter correspondingly used by the UE 1 to access/hand over to/reselect/select/camp on a base station/cell in a high standard (for example, 4G and 5G), and it may be determined, based on the parameter P1, whether the UE 1 can access/hand over to/reselect/select/camp on the base station/cell in the high standard (for example, 4G and 5G); and the parameter P2 is a parameter correspondingly used by the UE 1 to access/hand over to/reselect/select/camp on a base station/cell in a low standard (for example, 2G and 3G), and it may be determined, based on the parameter P2, whether the UE 1 can access/hand over to/reselect/select/camp on the base station/cell in the low standard (for example, 2G and 3G).

In a possible implementation, the capability information of the UE 1 may alternatively indicate that the UE 1 supports a solution for preventing an attack from the false base station. In this embodiment, the solution for preventing the attack from the false base station may be: The UE 1 ignores values of related parameters (to be specific, the parameter P1 and/or the parameter P2) in the system message broadcast by the base station, and the UE 1 autonomously sets the value of the parameter P1 (for example, ThershServing, _{LowP}) and/or the value of P2 (for example, Qᵣₓₗₑᵥₘᵢₙ), to prevent the UE 1 from accessing/handing over to/reselecting/camping on the false base station, thereby preventing the attack from the false base station.

In Embodiment 1, the value of the parameter P1 corresponding to the high standard is set to a small value, for example, 6 dB. This is equivalent to decreasing a threshold for the UE 1 to access/hand over to/reselect/select/camp on the base station/cell in the high standard, so that the UE 1 more easily or preferentially accesses/hands over to/reselects/selects/camps on the base station/cell in the high standard. In addition, because in the base station/cell in the low standard, the UE 1 is vulnerable to an attack from a false base station/false cell in the low standard, to prevent the UE 1 from accessing/handing over to/reselecting/selecting/camping on the base station/cell in the low standard, a threshold for the UE 1 to access/hand over to/reselect/select/camp on the base station/cell in the low standard needs to be increased, that is, the value of the parameter P2 corresponding to the low standard is set to a large value, for example, -116 dBm.

S402: The gNB sends a radio resource control release RRC release message to the UE 1, where the message includes first indication information, and the first indication information indicates the UE 1 to set the value of the parameter P1 and/or the value of the parameter P2.

For S401 and S402, the UE 1 reports the capability information of the UE 1 to the gNB, and the gNB indicates the UE 1 to set the value of P1 and/or the value of P2. This is equivalent to that the gNB controls a switch of preventing the UE 1 from being attacked by the false base station. In this way, the gNB may indicate, to the UE 1 based on an actual situation, to use/not to use the solution for preventing the attack from the false base station.

In some other embodiments, the CN may control the switch of preventing the UE 1 from being attacked by the false base station. In this case, after receiving the capability information of the UE 1 in S401, the gNB further reports the capability information of the UE 1 to the CN (as shown in a procedure indicated by using a dashed line in FIG. 4). When determining to enable the switch of preventing the UE 1 from being attacked by the false base station, the CN sends indication information (for example, the first indication information) to the gNB (as shown in a procedure indicated by using a dashed arrow in FIG. 4), to indicate the UE 1 to set the value of the parameter P1 and/or the value of the parameter P2, or indicate the UE 1 to use/not to use the solution for preventing the attack from the false base station. Further, in S402, the gNB includes, in the RRC release message, the indication information delivered by the CN, to send the indication information to the UE 1.

Alternatively, when the CN controls the switch of preventing the UE 1 from being attacked by the false base station, in S401, the UE 1 may include the capability information of the UE 1 in a NAS message (for example, a registration request registration request), and directly send the capability information to the CN. Further, when determining to enable the switch of preventing the UE 1 from being attacked by the false base station, the CN includes the indication information in a NAS message (for example, registration accept registration accept), and then directly sends the NAS message to the UE 1. The indication information carried in the NAS message indicates the UE 1 to set the value of the parameter P1 and/or the value of the parameter P2, or indicates the UE 1 to use/not to use the solution for preventing the attack from the false base station.

S403: The UE 1 sets the value of the parameter P1 and/or the value of the parameter P2 based on the first indication information.

In some embodiments, the first indication information indicates the UE 1 to use the solution for preventing the attack from the false base station or turn on a function of preventing the attack from the false base station, and the UE 1 uses the foregoing solution for preventing the attack from the false base station.

Specifically, the UE 1 ignores the value of P1 in the system message broadcast by the gNB and/or the value of P2 in the system message broadcast by the gNB, and chooses to correspondingly set the value of the parameter P1 to a preset value or a default value and/or set the value of the parameter P2 to a preset value or a default value.

For example, if a preset value of the parameter P1 (or a default value of P1) is a first value (for example, the parameter ThershServing=x, where x is a preset value of ThershServing), and a preset value of the parameter P2 (or a default value of P2) is a second value (for example, the parameter Qᵣₓₗₑᵥₘᵢₙ=y, where y is a preset value of Qᵣₓₗₑᵥₘᵢₙ), after receiving the first indication information, the UE 1 may set the value of the parameter P1 in the system message to the first value and/or set the value of the parameter P2 in the system message to the second value. Subsequently, the UE 1 may perform a procedure such as access/handover/selection/reselection/camping based on P1 and/or P2 whose value is set.

In Embodiment 1, to prevent UE from accessing/handing over to/selecting/reselecting/camping on the base station/cell in the low standard from being vulnerable to the attack from the false base station, the solution for preventing the attack from the false base station is formulated (that is, indicating the UE to set the value of the parameter P1 in the system message and/or the value of the parameter P2 in the system message). When the UE supports using the solution for preventing the attack from the false base station, the network device (that is, the gNB or the CN) may control an execution switch of the solution. Therefore, the network device (that is, the gNB or the CN) may flexibly indicate, based on the actual situation, the UE to enable/disable the solution for preventing the attack from the false base station (or indicate the UE whether to set the value of the parameter P1 in the system message and/or the value of the parameter P2 in the system message). According to the method, the UE can be effectively prevented from being attacked by the false base station, and flexibility of executing the solution for preventing the attack from the false base station can be improved.

### Embodiment 2

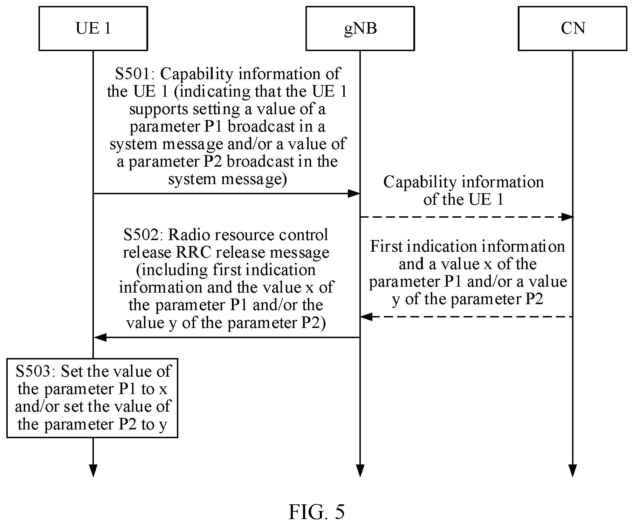

In comparison with Embodiment 1, a main difference of Embodiment 2 lies in that when UE 1 sets a value of a parameter P1 and/or a value of a parameter P2, the value of P1 and/or the value of P2 are/is not non-preset or non-default values/a non-preset or non-default value, and are/is from a base station gNB (or a core network CN). Refer to FIG. 5. A procedure of Embodiment 2 is as follows.

S501: The UE 1 sends capability information of the UE 1 to the gNB, where the capability information indicates that the UE 1 supports setting the value of the parameter P1 (for example, ThershServing, _{LowP}) broadcast in a system message and/or the value of the parameter P2 (for example, Qᵣₓₗₑᵥₘᵢₙ) broadcast in the system message.

For a specific implementation of step 501, refer to the specific implementation of S401. Details are not described herein again.

S502: The gNB sends a radio resource control release RRC release message to the UE 1, where the message carries first indication information and a value x of the parameter P1 and/or a value y of the parameter P2, and the first indication information indicates the UE 1 to set the value of the parameter P1 and/or the value of the parameter P2.

For a specific implementation of step 502, refer to the specific implementation of S402. However, different from S402, the RRC release message in S502 further includes the value of the parameter P1 (for example, if ThershServing=x, x is the value of ThershServing) and/or the value of the parameter P2 (for example, if Qᵣₓₗₑᵥₘᵢₙ=y, y is the value of Qᵣₓₗₑᵥₘᵢₙ).

In addition, if the CN controls a switch of preventing the UE 1 from being attacked by a false base station, the value x of the parameter P1 and/or the value y of the parameter P2 are/is from the CN. Optionally, the first indication information is also from the CN (as shown in a procedure indicated by using a dashed line in FIG. 5). In other words, the CN first sends the value x of the parameter P1 and/or the value y of the parameter P2 and the first indication information to the gNB, and then the gNB includes the value x of the parameter P1 and/or the value y of the parameter P2 and the first indication information in the RRC release message, to send the value x of the parameter P1 and/or the value y of the parameter P2 and the first indication information to the UE 1. Alternatively, the CN may include the value x of the parameter P1 and/or the value y of the parameter P2 and the first indication information in a NAS message (for example, a registration accept message), and directly send the value x of the parameter P1 and/or the value y of the parameter P2 and the first indication information to the UE 1 without using the gNB.

In this embodiment, the first indication information may be generated by the gNB, or may be generated by the CN. This is not specifically limited.

S503: The UE 1 sets the value of the parameter P1 to x and/or sets the value of the parameter P2 to y.

For a specific implementation of step 503, refer to the specific implementation of S403. Details are not described herein again.

In Embodiment 2, a network device (that is, the gNB or the CN) may flexibly indicate, based on an actual situation, UE to enable/disable a solution for preventing an attack from the false base station (or indicate UE whether to set the value of the parameter P1 in the system message and/or the value of the parameter P2 in the system message), and provide the UE with the value of the parameter P1 and/or the value of the parameter P2 to perform setting, so that the UE can be effectively prevented from being attacked by the false base station, and flexibility of executing the solution for preventing the attack from the false base station can be improved.

### Embodiment 3

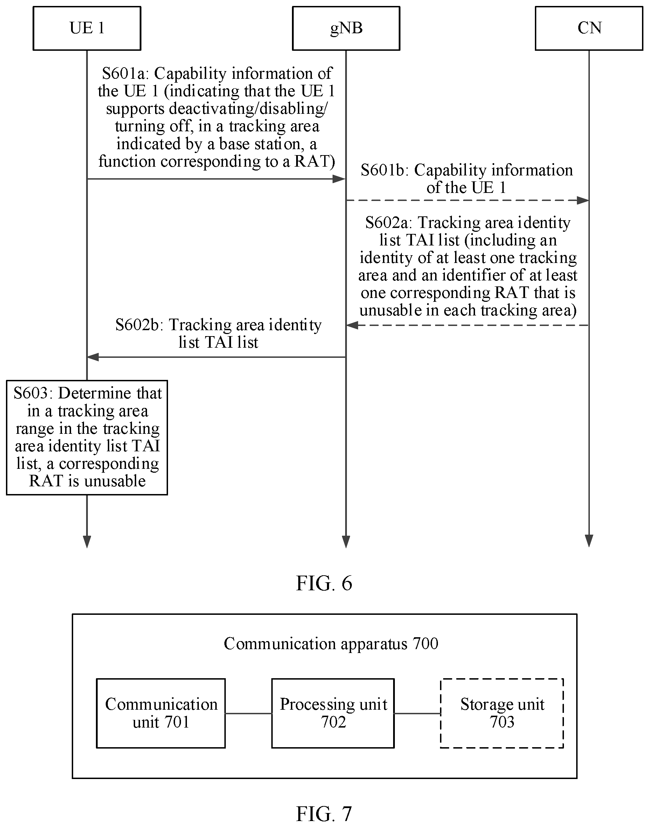

Based on the solution in FIG. 3B, in Embodiment 3, a core network CN provides UE 1 with at least one tracking area and at least one standard that is unusable in the area, to prevent the UE 1 from being attacked by a false base station. Refer to FIG. 6. A procedure of Embodiment 3 is as follows.

S601a: The UE 1 sends capability information of the UE 1 to a gNB, where the capability information indicates that the UE 1 supports deactivating/disabling/turning off, in a tracking area indicated by the gNB, a function corresponding to a standard.

For example, the UE 1 may send the capability information to the gNB through an air interface.

In a possible implementation, the capability information of the UE 1 may further indicate that the UE 1 supports a solution for preventing an attack from the false base station. In this embodiment of this application, the solution for preventing the attack from the false base station may be: The CN indicates, to the UE 1, that one or more corresponding standards are unusable in a specified tracking area. In this way, the UE 1 can be prevented from accessing/handing over to/selecting/reselecting/camping on a false base station/false cell in the standard in the specified tracking area, to prevent the UE 1 from being attacked.

S601b: The gNB sends the capability information of the UE 1 to the CN.

In this embodiment, the UE 1 may alternatively choose to include the capability information of the UE 1 in a NAS message (for example, a registration request registration request message), and directly send, to the CN without forwarding by the gNB, the NAS message that carries the capability information of the UE 1.

S602a: The CN sends a tracking area identity list TAI list to the gNB, where the list includes an identity of at least one tracking area and an identifier of at least one corresponding standard that is unusable in each tracking area.

For example, when enabling a switch of preventing the UE 1 from being attacked by the false base station, the CN may determine at least one tracking area for the UE 1, where the at least one tracking area may be a registration area of the UE 1, or may be a subset (that is, at least one sub-area in a registration area of the UE 1) in a registration area of the UE 1, and the CN may determine one or more standards that are unusable by the UE 1 in each tracking area. Refer to Table 1. Table 1 shows the TAI list configured by the core network for the UE 1. The TAI list includes three tracking areas whose identities are 1, 2, and 3. A corresponding standard that is unusable in a tracking area 1 is 2G, corresponding standards that are unusable in a tracking area 2 are 2G and 3G, and corresponding standards that are unusable in a tracking area 3 are 2G, 3G, and 4G.

**Table 1**

| Tracking area identity | Identifier of a standard that is unusable |
|---|---|
| 1 | 2G |
| 2 | 2G |
| | 3G |
| 3 | 2G |
| | 3G |
| | 4G |
| ... | ... |

Table 1 is merely used as an example. During actual application, the TAI list delivered by the CN to the UE 1 may include more or less information.

In this embodiment, the CN may alternatively include the TAI list in a NAS message, and directly send the TAI list to the UE 1 without forwarding by the gNB (as shown in a procedure indicated by using a dashed arrow in FIG. 6).

S602b: The gNB sends the tracking area identity list TAI list to the UE 1.

S603: The UE 1 determines that when the UE 1 is located in a tracking area range in the TAI list, a corresponding standard is unusable.

For example, the CN indicates that when the UE 1 is in the tracking area range 1, a network in a 2G standard is unusable, and the UE 1 has a capability of accessing a 2G network. When the UE 1 is located in a range of the tracking area 1, the UE 1 turns off a 2G module of the UE 1, or deactivates/disables a 2G function of the UE 1.

In Embodiment 3, the solution for preventing the attack from the false base station is formulated for UE (that is, the CN indicates, to the UE 1, that one or more corresponding standards are unusable in the specified tracking area). When the UE supports using the solution for preventing the attack from the false base station, the CN flexibly indicates, to the UE, standards that are unusable in some geographical ranges, so that the UE can be effectively prevented from accessing/handing over to/selecting/reselecting/camping on a base station/cell in a standard having a security risk when entering these geographical ranges, to effectively prevent the UE from being attacked by the false base station.

For Embodiment 1 to Embodiment 3, it should be noted that:
(1) Embodiment 1 to Embodiment 3 may be separately implemented, or may be implemented in combination. This is not specifically limited. For example, Embodiment 1 or Embodiment 2 may be combined with the solution in Embodiment 3. To be specific, when indicating the UE 1 to set the value of the parameter P1 and/or the value of the parameter P2, the network device may further provide the UE 1 with at least one tracking area and at least one standard that is unusable in the area. This is not limited in embodiments of this application.
(2) The foregoing focuses on differences among Embodiment 1 to Embodiment 3. For other content than the differences, mutual reference may be made to Embodiment 1 to Embodiment 3.
(3) Step numbers in the flowcharts described in Embodiment 1 to Embodiment 3 are merely an example of an execution procedure, and do not constitute a limitation on an execution sequence of the steps. In embodiments of this application, there is no strict execution sequence between steps that do not have a time sequence dependency relationship with each other. In addition, not all steps shown in each flowchart are necessarily performed steps, and a part of steps may be added or deleted for each flowchart based on an actual requirement.

In the foregoing embodiments provided in this application, the methods provided in embodiments of this application are separately described from a perspective of interaction between devices. To implement functions in the methods provided in the foregoing embodiments of this application, the terminal device or the network device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In embodiments of this application, division into modules is an example, and is merely division into logical functions. During actual implementation, there may be another division manner. In addition, functional modules in embodiments of this application may be integrated into one processor, or may exist alone physically, or two or more modules may be integrated into one module. The integrated module may be implemented in a form of hardware, or may be implemented in a form of a software functional module.

Same as the foregoing concept, as shown in FIG. 7, an embodiment of this application further provides a communication apparatus 700, configured to implement functions of the terminal device or the network device in the foregoing methods. For example, the communication apparatus 700 may be a software module or a chip system. In this embodiment of this application, the chip system may include a chip, or may include a chip and another discrete component. The communication apparatus 700 may include a communication unit 701 and a processing unit 702.

In this embodiment of this application, the communication unit 701 may also be referred to as a transceiver unit, and may include a sending unit and/or a receiving unit, which are respectively configured to perform sending and receiving steps of the network device or the terminal device in the foregoing method embodiments. The processing unit 702 may be configured to read instructions and/or data in a storage module, to cause the communication apparatus 700 to implement the foregoing method embodiments.

Optionally, the communication apparatus 700 may further include a storage unit 703. The storage unit 703 is equivalent to the storage module, and may be configured to store the instructions and/or data.

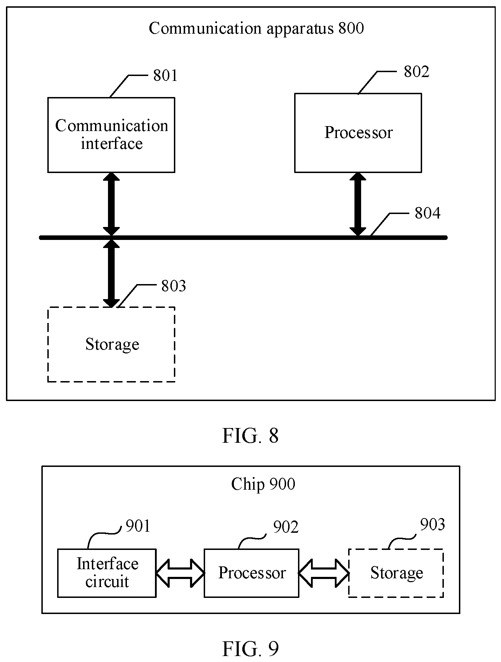

The following describes in detail communication apparatuses provided in embodiments of this application with reference to FIG. 7 and FIG. 8. It should be understood that descriptions of apparatus embodiments correspond to descriptions of method embodiments. Therefore, for content that is not described in detail, refer to the method embodiments in FIG. 3A and FIG. 3B and FIG. 4 to FIG. 6. For brevity, details are not described herein again.

The communication unit 701 may also be referred to as a transceiver, a transceiver machine, a transceiver apparatus, or the like. The processing unit may also be referred to as a processor, a processing board, a processing module, a processing apparatus, or the like. Optionally, a component configured to implement a receiving function in the communication unit 701 may be considered as the receiving unit, and a component configured to implement a sending function in the communication unit 701 may be considered as the sending unit. That is, the communication unit 701 includes the receiving unit and the sending unit. The communication unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

When the communication apparatus 700 performs the terminal device in the procedure shown in FIG. 3A in the foregoing embodiment, the communication unit 701 is configured to receive a first message from the network device, where the first message indicates the terminal device to set a value of access information; and the processing unit 702 is configured to set the value of the access information based on the first message.

When the communication apparatus 700 performs the network device in the procedure shown in FIG. 3A in the foregoing embodiment, the processing unit 702 is configured to generate a first message, where the first message indicates the terminal device to set a value of access information; and the communication unit 701 is configured to send the first message to the terminal device.

When the communication apparatus 700 performs the terminal device in the procedure shown in FIG. 3B in the foregoing embodiment, the communication unit 701 is configured to receive a second message from the network device, where the second message includes indication information of a first tracking area and identification information of a first access type corresponding to the first tracking area; and the processing unit 702 is configured to determine, based on the second message, that the first access type is unusable in the first tracking area.

When the communication apparatus 700 performs the network device in the procedure shown in FIG. 3B in the foregoing embodiment, the processing unit 702 is configured to generate a second message, where the second message includes indication information of a first tracking area and identification information of a first access type corresponding to the first tracking area; and the communication unit 701 is configured to send the second message to the terminal device.

The foregoing is merely an example. The processing unit 702 and the communication unit 701 may further perform other functions. For more detailed descriptions, refer to related descriptions in the method embodiments shown in FIG. 3A and FIG. 3B and FIG. 4 to FIG. 6. Details are not described herein.

FIG. 8 shows a communication apparatus 800 according to an embodiment of this application. The communication apparatus shown in FIG. 8 may be an implementation of a hardware circuit of the communication apparatus shown in FIG. 7. The communication apparatus 800 is applicable to the foregoing flowcharts, and may perform functions of the terminal device or the network device in the foregoing method embodiments. For ease of description, FIG. 8 shows only main components of the communication apparatus.

As shown in FIG. 8, the communication apparatus 800 includes a communication interface 801 and a processor 802. The communication interface 801 and the processor 802 are coupled to each other. It may be understood that the communication interface 801 may be a transceiver or an input/output interface, or may be an interface circuit like a transceiver circuit. Optionally, the communication apparatus 800 may further include a storage 803, configured to store instructions executed by the processor 802, store input data needed by the processor 802 to run the instructions, or store data generated after the processor 802 runs the instructions.

For example, when the communication apparatus 800 is configured to implement the methods shown in FIG. 3A and FIG. 3B, the communication interface 801 is configured to implement functions of the communication unit 701, and the processor 802 is configured to implement functions of the processing unit 702.

A specific connection medium between the communication interface 801, the processor 802, and the storage 803 is not limited in this embodiment of this application. In this embodiment of this application, the storage 803, the processor 802, and the communication interface 801 are connected through a communication bus 804 in FIG. 8. The communication bus 804 is represented by using a bold line in FIG. 8, and a connection manner between other components is merely schematically described, and is not limited thereto. The communication bus 804 may be classified into an address bus, a data bus, a control bus, and the like. For ease of representation, only one bold line is used to represent the bus in FIG. 8, but it does not indicate that there is only one bus or only one type of bus.

When the communication apparatus is a chip, FIG. 9 is a diagram of a simplified apparatus structure of a chip. A chip 900 includes an interface circuit 901 and one or more processors 902. Optionally, the chip 900 may further include a bus. Specifically:

The processor 902 may be an integrated circuit chip, and has a signal processing capability. In an implementation process, steps in the foregoing communication method may be implemented through a hardware integrated logic circuit in the processor 902, or by using instructions in a form of software. The processor 902 may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor 902 may implement or perform the methods and steps that are disclosed in embodiments of this application. The general-purpose processor may be a microprocessor, or the processor may be any conventional processor or the like.

The interface circuit 901 may be configured to send or receive data, instructions, or information. The processor 902 may perform processing by using the data, the instructions, or other information received by the interface circuit 901, and may send processed information through the interface circuit 901.

Optionally, the chip further includes a storage 903. The storage 903 may include a read-only memory and a random access memory, and provide operation instructions and data for the processor. A part of the storage 903 may further include a non-volatile random access memory (NVRAM).

Optionally, the storage stores an executable software module or a data structure, and the processor may perform a corresponding operation by invoking the operation instructions stored in the storage (the operation instructions may be stored in an operating system).

Optionally, the chip may be used in the terminal device or the network device in embodiments of this application. Optionally, the interface circuit 901 may be configured to output an execution result of the processor 902. For the communication methods provided in one or more embodiments of this application, refer to the foregoing embodiments. Details are not described herein again.

It should be noted that a function corresponding to each of the interface circuit 901 and the processor 902 may be implemented by using a hardware design, may be implemented by using a software design, or may be implemented by a combination of software and hardware. This is not limited herein.

An embodiment of this application further provides a computer-readable storage medium. The computer-readable storage medium stores computer instructions for implementing the methods performed by the terminal device or the network device in the foregoing method embodiments.

For example, when a computer program is executed by a computer, the computer is caused to implement the methods performed by the terminal device or the network device in the foregoing method embodiments.

An embodiment of this application further provides a computer program product including instructions. When the instructions are executed by a computer, the computer is caused to implement the methods performed by the terminal device or the network device in the foregoing method embodiments.

An embodiment of this application further provides a chip, including a processor, configured to invoke a computer program or computer instructions stored in a storage, to cause the processor to perform the communication methods in the embodiments shown in FIG. 3A and FIG. 3B and FIG. 4 to FIG. 6.

In a possible implementation, an input of the chip corresponds to a receiving operation in the embodiments shown in FIG. 3A and FIG. 3B and FIG. 4 to FIG. 6, and an output of the chip corresponds to a sending operation in the embodiments shown in FIG. 3A and FIG. 3B and FIG. 4 to FIG. 6.

Optionally, the processor is coupled to the storage through an interface.

Optionally, the chip further includes the storage, and the storage stores a computer program or computer instructions.

The processor mentioned in any one of the foregoing may be a general-purpose central processing unit, a microprocessor, an application-specific integrated circuit (application-specific integrated circuit, ASIC), or one or more integrated circuits configured to control program execution of the communication method in the embodiments shown in FIG. 3A and FIG. 3B and FIG. 4 to FIG. 6. The storage mentioned in any one of the foregoing may be a read-only memory (read-only memory, ROM), another type of static storage device that can store static information and instructions, a random access memory (random access memory, RAM), or the like.

It should be noted that for ease and brevity of description, for explanations and beneficial effects of related content of any one of the communication apparatuses provided above, refer to the corresponding communication method embodiments provided above. Details are not described herein again.

In this application, a hardware layer, an operating system layer running above the hardware layer, and an application layer running above the operating system layer may be further included between the communication apparatuses. The hardware layer may include hardware such as a central processing unit (central processing unit, CPU), a memory management unit (memory management unit, MMU), and a memory (also referred to as a main memory). An operating system at the operating system layer may be any one or more computer operating systems that implement service processing by using a process (process), for example, a Linux operating system, a Unix operating system, an Android operating system, an iOS operating system, or a Windows operating system. The application layer may include applications such as a browser, an address book, word processing software, and instant messaging software.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

Through descriptions of the foregoing implementations, a person skilled in the art may clearly understand that embodiments of this application may be implemented by hardware, firmware, or a combination thereof. When embodiments of this application are implemented by software, the foregoing functions may be stored in a computer-readable medium or transmitted as one or more instructions or code in a computer-readable medium. The computer-readable medium includes a computer storage medium and a communication medium, where the communication medium includes any medium that causes a computer program to be transmitted from one place to another place. The storage medium may be any available medium accessible to a computer. Examples of the computer-readable medium include but are not limited to: a RAM, a ROM, an electrically erasable programmable read-only memory (electrically erasable programmable read-only memory, EEPROM), a compact disc read-only memory (compact disc read-only memory, CD-ROM) or another optical disc storage, a magnetic disk storage medium or another magnetic storage device, or any other medium that can be used to carry or store expected program code in a form of instructions or a data structure and that can be accessed by a computer. In addition, any connection may be properly defined as a computer-readable medium. For example, if software is transmitted from a website, a server, or another remote source by using a coaxial cable, an optical fiber and optical cable, a twisted pair, a digital subscriber line (digital subscriber line, DSL), or wireless technologies such as infrared, radio, and microwave, the coaxial cable, the optical fiber and optical cable, the twisted pair, the DSL, or the wireless technologies such as infrared, radio, and microwave are included in fixation of a medium to which the coaxial cable, the optical fiber and optical cable, the twisted pair, the DSL, or the wireless technologies such as infrared, radio, and microwave belong. For example, a disk (disk) and a disc (disc) used in embodiments of this application include a compact disc (compact disc, CD), a laser disc, an optical disc, a digital video disc (digital video disc, DVD), a floppy disk, and a Blu-ray disc. The disk generally copies data by a magnetic means, and the disc copies data optically by a laser means. The foregoing combination should also be included in the protection scope of the computer-readable medium.

In conclusion, the foregoing descriptions are merely embodiments of this application and are not intended to limit the protection scope of this application. Any modification, equivalent replacement, improvement, and the like made based on the disclosure of this application shall fall within the protection scope of this application.

## Claims

1. A communication method, wherein the method is applied to a terminal device or a chip of the terminal device, and comprises:
receiving a first message from a network device, wherein the first message indicates the terminal device to set a value of access information; and
setting the value of the access information based on the first message.

2. The method according to claim 1, wherein before the receiving the first message from the network device, the method further comprises: sending capability information of the terminal device to the network device, wherein the capability information of the terminal device indicates that the terminal device supports setting the value of the access information.

3. The method according to claim 1 or 2, wherein the access information is information in a system message, and the access information is one or both of the following:
a power threshold corresponding to an access type or a frequency priority corresponding to the access type.

4. The method according to claim 3, wherein the first message comprises first indication information, and the first indication information indicates the terminal device to set a power threshold corresponding to a first access type to a first preset value.

5. The method according to claim 4, wherein the first indication information further indicates to set a power threshold corresponding to a second access type to a second preset value.

6. The method according to claim 4 or 5, wherein the first message further comprises the first preset value and/or the second preset value.

7. The method according to claim 5 or 6, wherein the first access type is a low-priority access type, and the first access type is one or both of the following:
a second generation radio access network 2G GERAN and a third generation universal mobile telecommunications system terrestrial radio access network 3G UTRAN; and
the second access type is a high-priority access type, and the second access type is one or both of the following:
a fourth generation evolved universal mobile telecommunications system terrestrial radio access network 4G E-UTRAN or fifth generation new radio 5G NR.

8. The method according to any one of claims 1 to 7, wherein the method further comprises:
receiving second indication information from the network device, wherein the second indication information indicates the terminal device to set the value of the access information based on a value in the system message.

9. The method according to any one of claims 1 to 8, wherein the first message is an access stratum AS message or a non-access stratum NAS message, wherein
the access stratum AS message is any one of the following:
a radio resource control setup RRC setup message, a radio resource control reestablishment RRC reestablishment message, a radio resource control release RRC release message, or a radio resource control reconfiguration RRC reconfiguration message; and
the non-access stratum NAS message is any one of the following:
a registration accept registration accept message, a registration reject registration reject message, a protocol data unit PDU session establishment accept message, or a PDU session modification accept message.

10. A communication method, wherein the method is applied to a terminal device or a chip of the terminal device, and comprises:
receiving a second message from a network device, wherein the second message comprises indication information of a first tracking area and identification information of a first access type corresponding to the first tracking area; and
determining, based on the second message, that the first access type is unusable in the first tracking area.

11. The method according to claim 10, wherein the method further comprises: sending capability information of the terminal device to the network device, wherein the capability information of the terminal device indicates that the terminal device supports turning on or turning off a function corresponding to an access type.

12. The method according to claim 10 or 11, wherein the method further comprises: turning off, in the first tracking area, a functional module corresponding to the first access type, or ignoring a signal and a system message that correspond to the first access type.

13. The method according to either of claim 10 or 11, wherein the second message further comprises indication information of a second tracking area and identification information of a second access type corresponding to the second tracking area.

14. The method according to any one of claims 10 to 13, wherein the first access type or the second access type is one or more of the following:
a second generation radio access network 2G GERAN, a third generation universal mobile telecommunications system terrestrial radio access network 3G UTRAN, a fourth generation evolved universal mobile telecommunications system terrestrial radio access network 4G E-UTRAN, and fifth generation new radio 5G NR.

15. The method according to any one of claims 10 to 14, wherein the second message is an access stratum AS message or a non-access stratum NAS message, wherein
the access stratum AS message is any one of the following:
a radio resource control setup RRC setup message, a radio resource control reestablishment RRC reestablishment message, a radio resource control release RRC release message, or a radio resource control reconfiguration RRC reconfiguration message; and
the non-access stratum NAS message is any one of the following:
a registration accept registration accept message, a registration reject registration reject message, a protocol data unit PDU session establishment accept message, or a PDU session modification accept message.

16. A communication method, wherein the method is applied to a network device or a chip of the network device, and comprises:
generating a first message, wherein the first message indicates a terminal device to set a value of access information; and
sending the first message to the terminal device.

17. The method according to claim 16, wherein the method further comprises: receiving capability information of the terminal device, wherein the capability information of the terminal device indicates that the terminal device supports setting the value of the access information.

18. The method according to claim 16 or 17, wherein the access information is information in a system message, and the access information is one or both of the following:
a power threshold corresponding to an access type or a frequency priority corresponding to the access type.

19. The method according to claim 18, wherein the first message comprises first indication information, and the first indication information indicates the terminal device to set a power threshold corresponding to a first access type to a first preset value.

20. The method according to claim 19, wherein the first indication information further indicates to set a power threshold corresponding to a second access type to a second preset value.

21. The method according to claim 19 or 20, wherein the first message further comprises the first preset value and/or the second preset value.

22. The method according to claim 19 or 20, wherein the first access type is a low-priority access type, and the first access type is one or both of the following:
a second generation radio access network 2G GERAN and a third generation universal mobile telecommunications system terrestrial radio access network 3G UTRAN; and
the second access type is a high-priority access type, and the second access type is one or both of the following:
a fourth generation evolved universal mobile telecommunications system terrestrial radio access network 4G E-UTRAN or fifth generation new radio 5G NR.

23. The method according to any one of claims 16 to 22, wherein the method further comprises:
sending second indication information to the terminal device, wherein the second indication information indicates the terminal device to set the value of the access information based on a value in the system message.

24. The method according to any one of claims 16 to 23, wherein the first message is an access stratum AS message or a non-access stratum NAS message, wherein
the access stratum AS message is any one of the following:
a radio resource control setup RRC setup message, a radio resource control reestablishment RRC reestablishment message, a radio resource control release RRC release message, or a radio resource control reconfiguration RRC reconfiguration message; and
the non-access stratum NAS message is any one of the following:
a registration accept registration accept message, a registration reject registration reject message, a protocol data unit PDU session establishment accept message, or a PDU session modification accept message.

25. A communication method, wherein the method is applied to a network device or a chip of the network device, and comprises:
generating a second message, wherein the second message comprises indication information of a first tracking area and identification information of a first access type corresponding to the first tracking area; and
sending the second message to a terminal device.

26. The method according to claim 25, wherein the method further comprises: receiving capability information of the terminal device, wherein the capability information of the terminal device indicates that the terminal device supports turning on or turning off a function corresponding to an access type.

27. The method according to claim 25 or 26, wherein the second message further comprises indication information of a second tracking area and identification information of a second access type corresponding to the second tracking area.

28. The method according to any one of claims 25 to 27, wherein the first access type or the second access network type is one or more of the following:
a second generation radio access network 2G GERAN, a third generation universal mobile telecommunications system terrestrial radio access network 3G UTRAN, a fourth generation evolved universal mobile telecommunications system terrestrial radio access network 4G E-UTRAN, and fifth generation new radio 5G NR.

29. The method according to any one of claims 25 to 28, wherein the second message is an access stratum AS message or a non-access stratum NAS message, wherein
the access stratum AS message is any one of the following:
a radio resource control setup RRC setup message, a radio resource control reestablishment RRC reestablishment message, a radio resource control release RRC release message, or a radio resource control reconfiguration RRC reconfiguration message; and
the non-access stratum NAS message is any one of the following:
a registration accept registration accept message, a registration reject registration reject message, a protocol data unit PDU session establishment accept message, or a PDU session modification accept message.

30. A communication apparatus, comprising a module or unit configured to perform the method according to any one of claims 1 to 9, comprising a module or unit configured to perform the method according to any one of claims 10 to 15, comprising a module or unit configured to perform the method according to any one of claims 16 to 24, or comprising a module or unit configured to perform the method according to any one of claims 25 to 29.

31. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement, by using a logic circuit or by executing code instructions, the method according to any one of claims 1 to 9, the method according to any one of claims 10 to 15, the method according to any one of claims 16 to 24, or the method according to any one of claims 25 to 29.

32. A communication system, comprising a terminal device that performs the method according to any one of claims 1 to 15, and a network device that performs the method according to any one of claims 16 to 29.

33. A computer-readable storage medium, wherein the storage medium stores a computer program or instructions, and when the computer program or the instructions are executed by a communication apparatus, the method according to any one of claims 1 to 29 is implemented.

34. A computer program product, wherein the computer program product stores computer-readable instructions, and when the computer-readable instructions are run, the method according to any one of claims 1 to 29 is performed.
